# EUROPEAN PATENT SPECIFICATION

(11) **EP 0 629 344 B1**
(45) Date of publication and mention of the grant of the patent: **28.10.1998**
(21) Application number: 94303455.3
(22) Date of filing: 13.05.1994
(51) Int. Cl.: A01N 31/04, A01N 35/02, A01N 35/04, A01N 37/02, A01N 45/02, A01N 47/06, A01N 49/00, A01N 37/44

(54) **Acyclic and carbocyclic ketones, alcohols, aldehydes nitriles and esters and uses thereof for their insect repellency and attractancy properties**
Acyclische und carbocyclische Ketone, Alkoholen, Aldehyde, Nitrile und Ester und ihre Verwendungen wegen ihrer insektenvertreibenden und -anlockenden Eigenschaften
Cétones, alcools, aldéhydes, nitriles et esters acycliques ou carbocycliques et leurs utilisations pour leurs propiétes répulsives et attractives d'insectes

(30) Priority: 14.05.1993 US 61044; 26.11.1993 US 157403; 26.11.1993 US 157420
(43) Date of publication of application: 21.12.1994
(60) Divisional application: 97115942.1
(73) Proprietor: INTERNATIONAL FLAVORS & FRAGRANCES INC., New YorkNew York 10019 (US); THE UNIVERSITY OF FLORIDA, Gainesville,Florida 32611 (US)
(72) Inventor: Marin, Anna B., Long Branch, NJ 07740 (US); Warren, Craig B., Rumson, NJ 07760 (US); Butler, Jerry F., Gainesville, FL 32605 (US); NARULA, Anubhav P.S., Hazlet, NJ 07730 (US)
(74) Representative: Brown, John David

(56) References cited:
- US-A- 4 282 205
- US-A- 5 098 886
- FARMACO, EDIZIONE SCIENTIFICA, vol. 29, no. 2, 1973, Pavia (IT); A. GUIOTTO et al., pp. 95-100
- CPI, BASIC ABSTRACTS JOURNAL, Week J50, 1982, Derwent Publications Ltd., London (GB); AN 7771
- CHEMICAL ABSTRACTS, vol. 114, no. 3, 21 January 1991, Columbus, OH (US); G. BUCHBAUER et al., AN 24204t

## Description

This invention relates to the use of dimethyl substituted oxymethyl cyclohexane derivatives defined according to the structure: 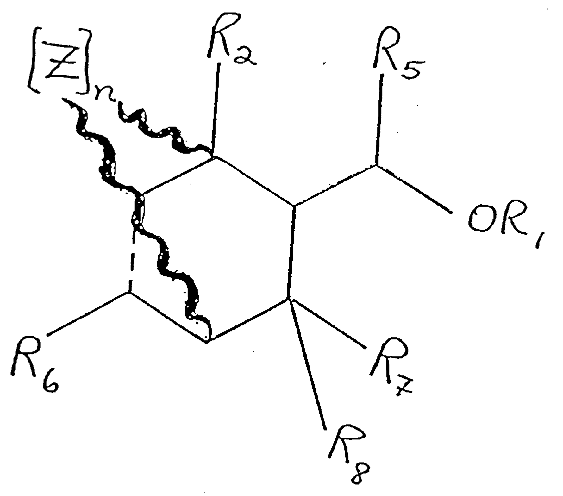 and geraldehyde having the structure: 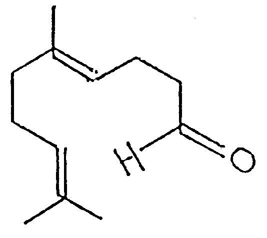 (wherein Z is methylene; n is 0 or 1; each of the wavy lines represents a carbon-carbon single bond or no bond (when n is 0); the dashed line represents a carbon-carbon double bond or a carbon-carbon single bond; each of R₂, R₅, R₆, R₇ and R₈ represent hydrogen or methyl; and R₁ is hydrogen acetyl or ethoxycarbonyl as insect repellents against house flies (Musca domestica L.(Diptera:Muscidae)), mosquitoes including those set forth on the following species list:
Culex nigripalpus;
Aedes atlanticus;
Culex salinarius;
Aedes vexans;
Culex spp.:
Simulium spp.;
Psoroferia ferox;
Aedes infirmatus;
Drosophila melanogaster;
Coccinellidae;
Anopheles crucians;
Psoroferia columbiae;
Culicoides spp.; and
Aedes spp.

and the Horn fly, Haematobia irritans [L.].

Disclosed herein is the use of the compound having the structure: 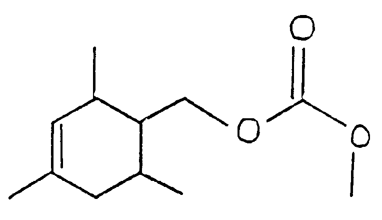 as an attractant for the insect species:
Culex nigripalpus;
Aedes atlanticus;
Culex salinarius;
Aedes vexans;
Culex spp.;
Simulium spp.;
Psoroferia ferox;
Aedes infirmatus;
Drosophila melanoaaster;
Coccinellidae;
Anopheles crucians;
Psoroferia columbiae;
Culicoides spp.; and
Aedes spp..

Specific examples of the dimethyl substituted oxymethyl cyclohexane derivatives useful in the practice of our invention are those having the following structures:

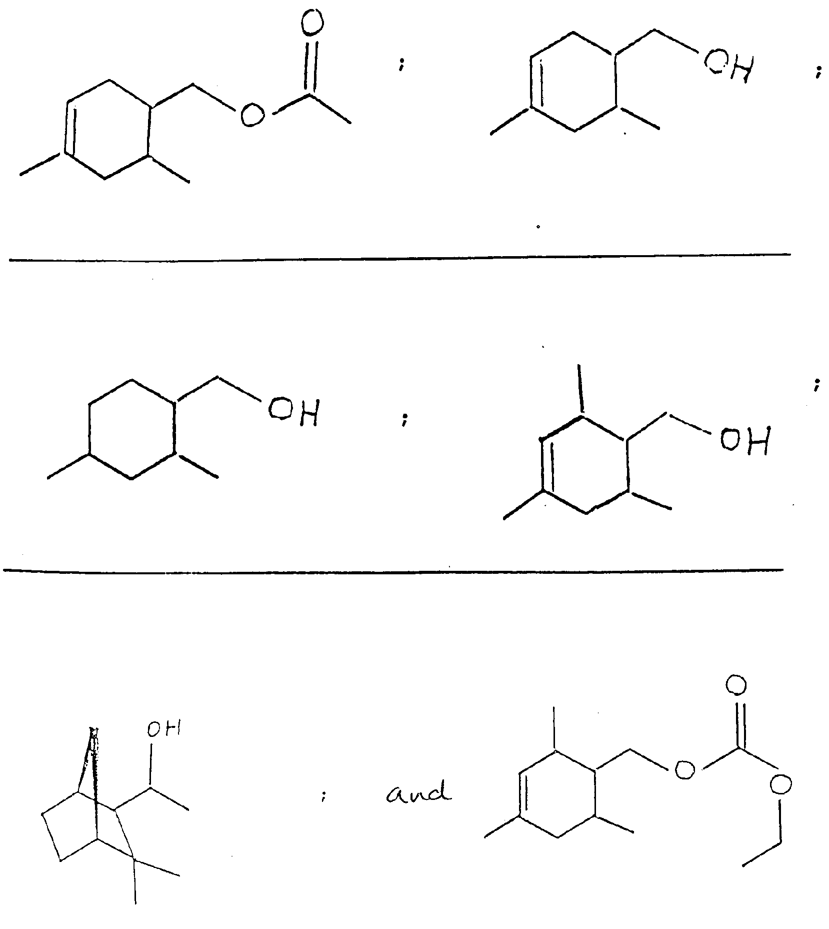

Also disclosed herein are dimethyl substituted oxymethyl cyclohexane derivatives having the following structures; 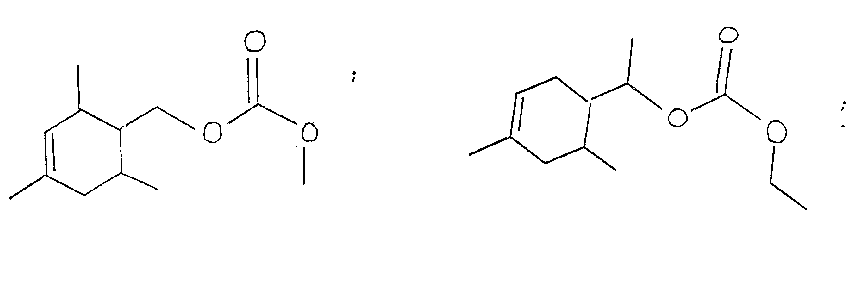 and

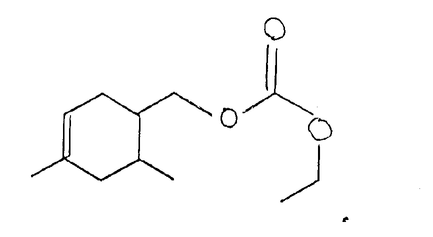

The dimethyl substituted oxymethyl cyclohexane derivatives of our invention may be in the form of racemic mixtures or they may be in the form of sterioisomers. Thus, for example, representations of such sterioisomers are representations having the following structures: 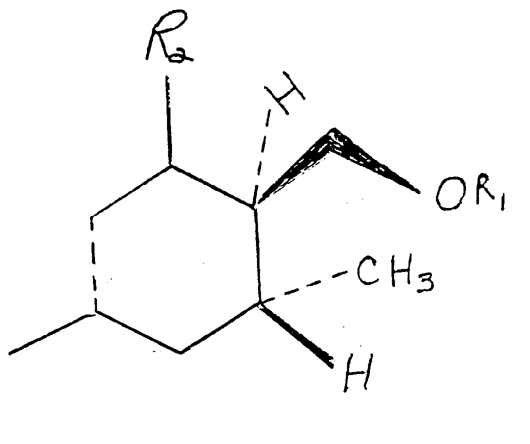 and 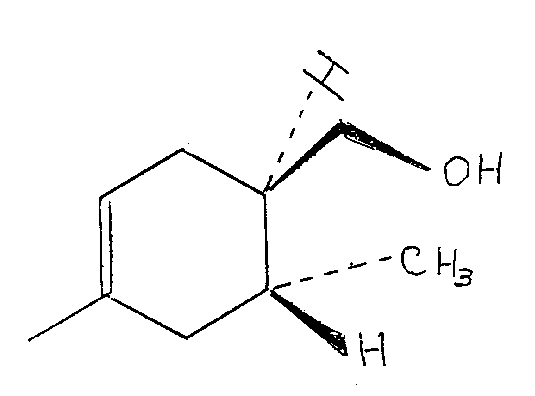 wherein R₁ is methyl or ethyl and R₂ is hydrogen or methyl.

Also disclosed herein are the uses of (i) the compound having the structure: 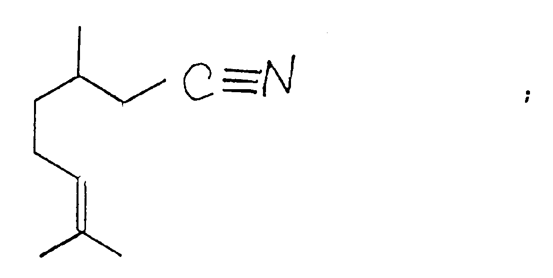 and/or (ii) the compound having the structure: 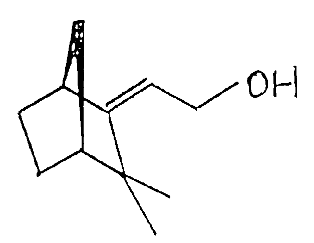 as repellents against the mosquito species Aedes aeavptae.

Also set forth herein are processes for repelling the mosquito species Aedes aegyptae consisting essentially of exposing a three dimensional space inhabited by said Aedes aegyptae to an Aedes aegyptae-repelling effective concentration and quantity of at least one of the following carbocyclic aldehydes or ketones:
(i) MELOZONET™ defined according to the structure: 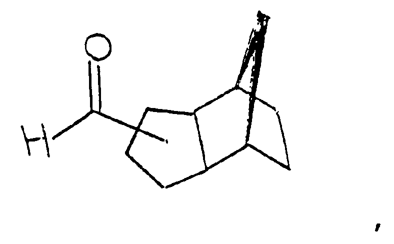 which is a mixture of compounds having from 60-40 mole percent of the compound having the structure: 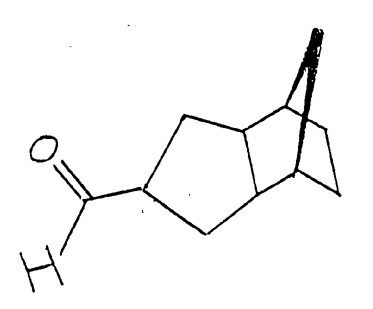 and from 40-60 mole percent of the compound having the structure: 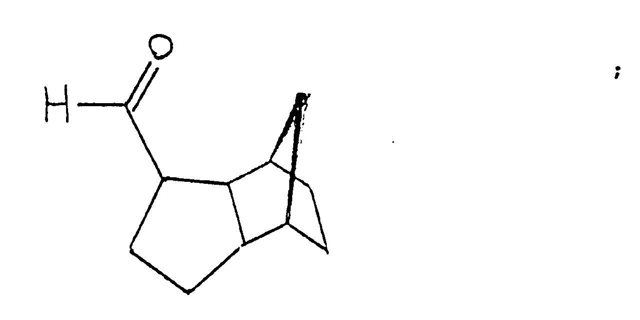
(ii) LAVONAX™ having the structure: 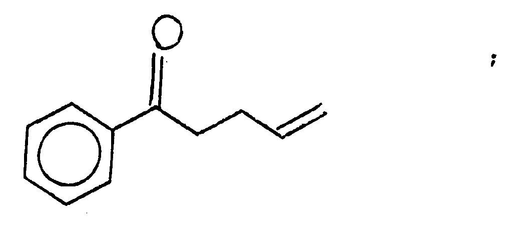 and/or
(iii) CYCLEMONE A™ a mixture of compounds having the structures: 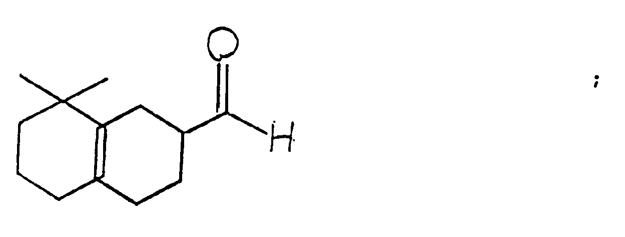 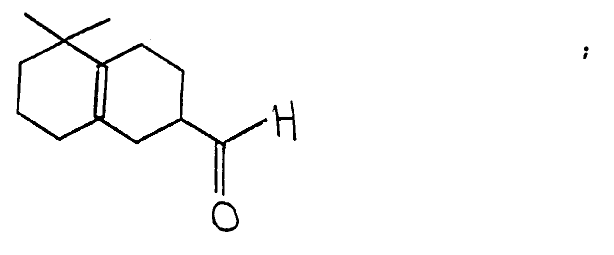 and 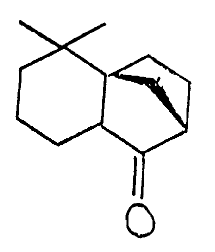 containing from 45-60 mole percent of the compound having the structure: 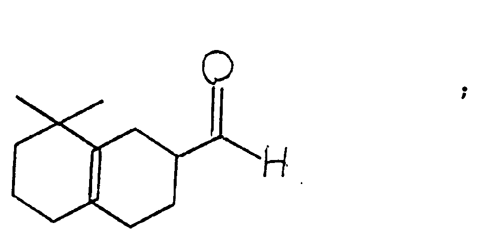 from 15-20 mole percent of the compound having the structure: 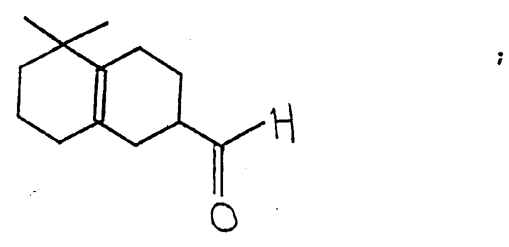 and from 25-35 mole percent of the compound having the structure:

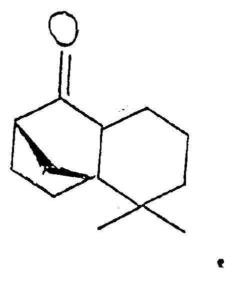

Our invention also relates to the use of the insect repellent compositions of our invention in personal soap compositions, for example, the insect repellent soap composition described in U.S. Letters Patent No. 4,707,496 issued on November 17, 1987. Thus, in applying the teachings of U.S. Letters Patent No. 4,707,496 to our invention, a topical insect repellent soap composition and a method of protection using such a composition is described where the insect repellent soap composition comprises:
(i) from 63.0 up to 99.5% by weight of a soap mixture containing from 4.1 to 7% by weight of a soap of caprylic acid, from 3.8 to 7% of a soap of capric acid, from 32.1 to 45% of a soap of lauric acid, from 12 to 17.5% by weight of a soap of myristic acid, from 5.0 up to 10% by weight of a soap of palmitic acid, from 1.6% to 3% by weight of a soap of stearic acid, from 3.5 to 5% by weight of a soap of oleic acid and from 0.9 to 5% by weight of a soap of linoleic acid;
(ii) from 0.1 up to 2% by weight of C₈-Cₗ₈ is straight chain fatty acids.
(iii) from 10 up to 30% by weight of one of the insect repellent compositions of our invention as set forth, supra, and
(iv) from 0.2 up to 5% by weight of an effective residual insecticide as described in U.S. Letters Patent No. 4,707,496.

Other insect repellent soaps can be produced by adding an appropriate insect repellent-containing composition of our invention to one or more of the compositions described and claimed in U.S. Letters Patent No. 4,453,909 issued on June 12, 1984 and U.S. Letters Patent No. 4,438,010. Described in said U.S. Letters Patent No. 4,453,909 and U.S. Letters Patent No. 4,438,010 is a process for making a tablet of saop containing a perfume containing core, hollow or solid fabricated from a hard plastic material either thermosetting or thermoplastic. The soap from the resulting composite tablet is useable until the core is washed clean and contains functional ingredients, e.g., the repellents described, supra, and optionally, aromatizing agent until the core is washed clean. This obviates the wastage of soap which normally occurs as a conventional soap tablet becomes very thin on use and at the same time gives rise to a continuously functional ingredient containing soap, (e.g., repellent and optionally aromatizing agent) tablet. Thus, this invention also contemplates detergent bars having a plastic core containing an appropriate insect repellent-containing compositions of our invention and optionally, an additional perfume. More particularly, this invention contemplates detergent bars intended for conventional toilet soap uses either as hand soaps or bath or shower soaps which are elastic or inelastic in nature but which contain a solid plastic core containing insect repellent and optionally perfume giving them unique properties which alleviate wastage thereof and causes the environment surrounding the soap on use thereof to be both insect repellent and optionally aromatized in an aesthetically pleasing manner.

The use of the insect repellent-containing compositions of our invention may be taken further in combination with N-(methyl toluyl)-methyl piperidines defined according to the structure: 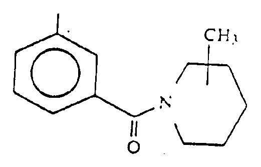 as described in U.S. Letters Patent No. 3,463,855 issued on August 26, 1969. The compounds defined according to the structure: 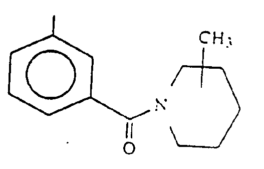 include:
N-(meta-toluyl)-2-methylpiperidine;
N-(meta-toluyl)-3-methylpiperidine; and
N-(meta-toluyl)-4-methylpiperidine.

The proportions of compounds defined according to the structure: 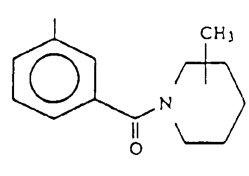 to the insect repellent-containing compositions described, supra, are between about 1 part N-(meta-toluyl) methylpiperidine:99 parts appropriate insect repellent-containing compositions of our invention down to 1 parts appropriate insect repellent-containing compositions of our invention:99 part N-(meta-toluyl)-methylpiperidines.

In addition, the compositions useful in repelling insects of our invention can also contain 1-nonen-3-ol described and claimed in U.S. Letters Patent Nos. 4,693,890 and 4,759,228 issued on July 26, 1988. The ratio of 1-nonen-3-ol:appropriate insect repellent-containing compositions of our invention useful in repellent compositions may vary from about 1 part 1-nonen-3-o!:99 parts appropriate insect repellent-containing compositions of our invention down to 99 parts 1-nonen-3-ol;1 part appropriate insect repellent-containing compositions of our invention.

In addition to the soap fabrication, repelling articles may be formed containing the appropriate insect repellent-containing compositions of our invention, that is, articles useful for repelling house flies (Musca domestica L.(Diptera:Muscidae)) or the mosquitoes (Aedes aegypti) or other insect species:
Culex nigripalpus;
Aedes atlanticus;
Culex salinarius;
Aedes vexans;
Culex spp.;
Simulium spp.;
Psoroferia ferox;
Aedes infirmatus;
Drosophila melanoaaster;
Coccinellidae;
Anopheles crucians;
Psoroferia columbiae;
Culicoides spp.; and
Aedes ^{g}p.

or the Horn fly (Haematobia irritans [L.]) in combination with compatible polymers which may or may not be biodegradable (for example, high density polyethylene or low density polyethylene, or biodegradable polymers such as biodegradable thermoplastic polyurethanes as disclosed in Japan Kokai Tokyo Koho 92/13710 (abstracted at Chem.Abstracts Volume 116:236374q), biodegradable ethylene polymers having ester linkages in the main chain such as that disclosed by Japan Kokai Tokyo Koho 92/50224 (abstracted at Chem.Abstracts Volume 116:236397z), biodegradable ethylene polymers disclosed by Japan Kokai Tokyo Koho 92/50225 (abstracted at Chem.Abstracts Volume 116:126398a) and poly(epsilon caprolactone) homopolymers and compositions containing same as disclosed in U.S. Letters Patent Nos. 4,496,467; 4,469,613 and 4,548,764. Thus, a process may be used for forming appropriate insect repellent-containing compositions of our invention containing polymeric particles such as foamed polymeric pellets which include a relatively high concentration of the appropriate insect repellent-containing compositions of our invention as defined, supra.

Appropriate insect repellent-containing polymeric pellets may be formed by means of introduction into a single or twin screw extruder, in series, a thermoplastic polymer followed by the appropriate insect repellent-containing composition of our invention which is compatible with the thermoplastic polymer, in turn, (optionally) followed by introduction of gaseous blowing agent or blowing agent which will produce a gas which is inert to the polymer and to the appropriate insect repellent-containing composition previously introduced into the extruder.

The advantages of using a foamed polymeric particle are multiple, to wit:
(i) improved handling;
(ii) greater retention of the appropriate insect repellent-containing composition when not in use; and
(iii) greater length of time during which the release of the appropriate insect repellent-containing composition of our invention from the polymer is at "steady state" or "0 order".

The nature of the extruder utilized to form the appropriate insect repellent-containing composition-containing polymer particles may be either single screw or double screw. Thus, the types of extruder that can be used are disclosed at pages 246-267 and 332-349 of the Modern Plastics Encylopedia, 1982-1983, published by the McGraw-Hill Publishing Company. More specifically, examples of extruders which are useable in carrying out one or more of these processes (with modification for introduction of the appropriate insect repellent-containing compositions of our invention) downstream from the introduction of the polymer and with further modification that the gaseous blowing agent is introduced still further downstream from the point of introduction of the appropriate insect repellent-containing compositions of our invention are as follows:
1. The Welex "Super Twinch" 3.5" extruder manufactured by Welex Incorporated, 850 Jolly Road, Blue Bell, Pa. 19422;
2. Krauss-Maffei twin screw extruder manufactured by the Krauss-Maffei Corporation/Extruder Division, 3629 West 30th Street South, Wichita, Kans. 67277;
3. Modified Sterling model 4000 and 5000 series extruder manufactured by Sterling Extruder Corporation of 901 Durham Avenue, South Plainfield, N. J.;
4. CRT ("Counter-Rotating Tangential"), Twin Screw Extruder manufactured by Welding Engineers, Inc. of King of Prussia, Pa. 19406;
5. The Leistritz Twin Screw Dispersion Compounder manufactured by the American Leistritz Extruder Corporation of 198 U.S. Route 206 South, Somerville, N. J. 08876;
6. The ZSK Twin Screw Co-Rotating Extruder manufactured by the Werner & Pfleiderer Corporation of 663 East Crescent Avenue, Ramsey, N. J. 07446;
7. The Farrel Extruder manufactured by Farrel Connecticut Division, Emhart Machinery Group, Ansonia, Conn. 06401;
8. The MPCN Baker Perkins Twin Screw Extruder manufactured by the Baker Perkins Inc. Chemical Machinery Division of Saginaw, Mich. 48601; and
9. The Berstorff single screw, twin screw, or foam extrusion equipment manufactured by Berstorff Corporation, P. O. Box 240357, 8200-A Arrowing Blvd., Charlotte, N. C. 28224.

In producing the appropriate insect repellent-containing composition-containing polymer particles, various polymers may be utilized, for example, low density polyethylene, high density polyethylene, polypropylene, the co-polymer of ethylene and vinyl acetate, and polyvinyl chloride. More specifically, the polymers used may be co-polymers of ethylene and a polar vinyl monomer selected from (a) vinyl acetate; (b) ethyl acrylate; (c) methyl acrylate; (d) butyl acrylate and (e) acrylic acid including the hydrolyzed co-polymer of ethylene and vinyl acetate. Preferred co-polymers are ethylene/vinyl acetate with about 9 to 60% vinyl acetate and ethylene/ethyl acrylate with about 6 to 18% ethyl acrylate.

Resins of the type disclosed for use as co-polymers are commerically available in the molding powder form; for example, ethylene vinyl acetate co-polymers are marketed by the E. I. duPont Nemours Company under the tradename "ELVAX^{@} and by the Arco Polymer Division under the trademark "DYLAND^{@} and by the Exxon Corporation of Linden, New Jersey under the trademark "DEXXON^{®}. Ethylene/ethyl acrylate co-polymers are marketed by Union Carbide Corporation under the trademark "EEA RESIN@.

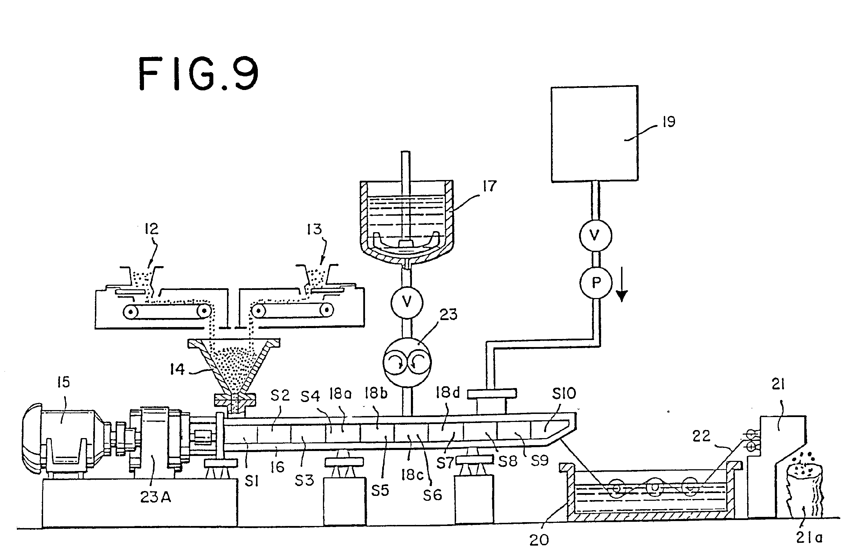

The polymer is added to the single screw or twin screw extruder at a feed rate in the range of from about 80 up to about 300 pounds per hour while maintaining the temperature of the screw extruder between about 160°C and about 240°C. If the polymer or co-polymer powder is added to the extruder at a reference "barrel segment", then the appropriate insect repellent-containing composition of our invention is added to the extruder under pressure downstream from the retention point of the polymer at one or more of "barrel segments" (S-2, S-3, S-5, S-6, S-7, S-8 or S-9)(referring to Figure 9 briefly described, supra, and described in detail, infra).

The proportion of the appropriate insect repellent-containing composition (taken further together with other insect repelling materials, if desired) to resin can vary from small but effective amounts on the order of about 1% of the weight of the resin body up about 45% by weight of the resin body. In general, it is preferred to use between about 5% up to about 30% based on the weight of the resin body of insect repellent composition of our invention. This is an optimum amount balancing the proportion of the insect repellent composition of our invention against the time period over which the article emits the insect repellent composition and against the tendency of the components of the insect repellent composition to oil out either individually or in combination. This "oiling out" is specifically avoided as a result of the use of the foaming agent discussed, infra.

Various polymers are useful in the practice of our invention. Specific examples of polymers useful in the practice of our invention are as follows:
(a) DYLAN^{@} brand of low density polyethylene DYLAN^{@} is a trademark owned by the Atlantic Richfield Company of Los Angeles, California;
(b) DYLITE^{O} of expandable polystyrene composition, DYLITE^{®} is a trademark of Atlantic Richfield Company of Los Angeles, California;
(c) SUPER DYLAN^{O} is a trademark of the Atlantic Richfield Company of Los Angeles, California;
(d) Blended polyethylene and carbon black as specifically taught in U.S. Letters Patent No. 4,369,267 issued on January 18, 1983;
(e) Polystyrene as disclosed in U.S. Letters Patent No. 4,369,227 issued on January 18, 1983;
(f) Polyene/alpha-olefin as exemplified and disclosed in U.S. Letters Patent No. 4,369,291;
(g) Poly-alpha-olefins as exemplified in Canadian Letters Patent No. 1.137,069 issued on December 7, 1982;
(h) Polymeric compositions as disclosed in Canadian Letters Patent No. 1,137,068 issued on December 7, 1982;
(i) Poly-alpha-olefins disclosed in Canadian Letters Patent No. 1,137,067;
(j) Polyolefins described in Canadian Letters Patent No. 1,137,066;
(k) Polyethylene oxides as disclosed in Canadian Letters Patent No. 1,137,065 issued on December 7, 1982;
(I) Olefin polymers and co-polymers as disclosed in Canadian Letters Patent No. 1,139,737. Canadian Letters Patent No. 1,139,737 was issued on January 18, 1983;
(m) Polyolefins disclosed in Canadian Letters Patent No. 1,139,738;
(n) Chlorinated PVC as disclosed in Polymer 1982, 23 (7,Suppl.), 1051-6 abstracted at Chem.Abstracts Volume 97:14550y, 1982;
(o) Polyepsilon caprolactone co-polymers made by means of alcohol initiated polymerization as disclosed in J.Polym.Sci.Polym.Chem.Ed. 1982, 20(2), pages 319-26, abstracted at Chem.Abstracts, Volume 96:123625x, 1982;
(p) Styrene acrylonitrile co-polymers as disclosed in Diss. Abstracts Int. B, 1982, 42(8), 3346 and abstracted at Chem.Abstractss Volume 96:143770n, (1982);
(q) Co-polymers of epsilon caprolactone with 1,4-butane diol as disclosed at Kauch Rezine, 1982, (2), 8-9, abstracted at Chem.Abstracts Volume 96:182506g (1982);
(r) Polyesters as disclosed in U.S. Letters Patent No. 4,326,010;
(s) Chlorinated polyethylene as disclosed by Belorgey, et al, J.Polym.Sci.Plym.Ed. 1982, 20(2), 191-203;
(t) Plasticized polyepsilon caprolactone co-polymers containing dimethyl phthalate plasticizers as set forth in Japanese Patent No. J81/147844, abstracted at Chem.Abstracts Volume 96:69984y (1982);
(u) Maleic anhydride modified adducts of polyepsilson caprolactone polyols and ethylenically unsaturated monomer as disclosed in U.S. Letters Patent No. 4,137,279 issued on January 30, 1979;
(v) Polyurethane polymers having lactone backbones as disclosed in U.S. Letters Patent No. 4,156,067 issued on May 22, 1979;
(w) Polyurethane polyether resins wherein the resin is obtained by reacting a polyfunctional lactone with a long chain polyalkylene diol and a urethane precursor as disclosed in U.S. Letters Patent No. 4,355,550 issued on March 10, 1981; and
(x) Resins having polyurethane backbones as disclosed in U.S. Letters Patent No. 3,975,350 issued on August 17, 1976.

Examples of poly(epsilon caprolactone) homopolymers as set forth, for example, in U.S. Letters Patent No. 4,496,467 are those having the structures: 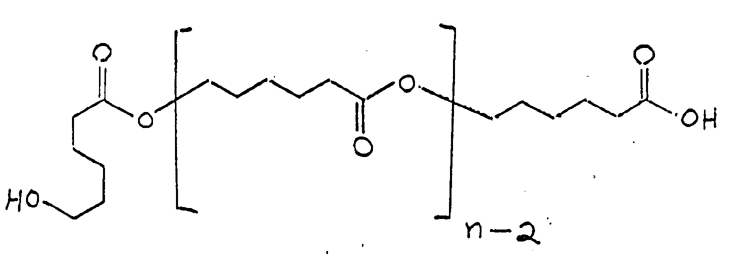 and 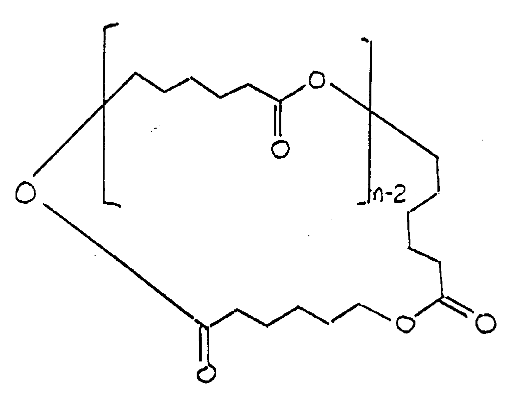 wherein n represents an integer of from about 500 up to about 1200 with the proviso that the average "n" varies from about 600 up to about 800.

Downstream from the addition point of the insect repellent-containing compositions of our invention taken alone or taken together with other insect repellent agents and fragrance materials, optionally, the gaseous or liquid containing blowing agent may be added (e.g., at "barrel segments" (S-5, S-6, S-7, S-8, S-9 or S-10) using the polymer addition "barrel segment" as a refrence "barrel segment" S-1. Examples of the gaseous blowing agents are carbon dioxide, nitrogen, mixtures of nitrogen and carbon dioxide in proportions of from 1 up to 99% by volume nitrogen and from 99 down to 1% by volume carbon dioxide, helium, mixtures of helium and nitrogen, mixtures of helium and carbon dioxide and other gases which are inert at the temperature and pressure of the polymer at the time of the extrusion operation. Thus, gas containing oxygen or other reactive gases, e.g., hydrogen, should be avoided. The pressure of the gas blowing agent being added to the extruder at the point of addition may vary from about 80 to about 150 psig. Higher pressures may be used without adversely affecting the usefulness of the foamed insect repellent composition-containing particle.

The feed rate range of insect repellent compositions which contain but which are not limited to the insect repellent-containing compositions of our invention, may be between about 0.5% up to about 45% by weight of the polymer. It must be emphasized at this point that the insect repellent composition of our invention are in and of themselves aromatizing materials. However, the maximum quantity of the combination of other aromatizing materials and the appropriate insect repellent-containing compositions of our invention is 45%.

The dies of the extruder may create rod, sheet, film or ribbon. The resulting product may then, if desired, be pelletized to form insect repellent composition-containing polymer particles or the ribbon may be used "as is" as an insect repellent-containing polymeric article of manufacture itself.

In addition to the optional gaseous blowing agents (which are necessarily "inert" gases), blowing agents may be added at the same point on the extruder which will create gaseous voids in the insect repellent-containing polymer articles and these "blowing agents" are well known to one having ordinary skill in the art. Examples of such non-gaseous containing materials which yield gases on admixture with the polymer in the extruder but which are still insert to the insect repellent (or attractant in the event of formulation of microporous polymeric particles containing the compound having the structure: 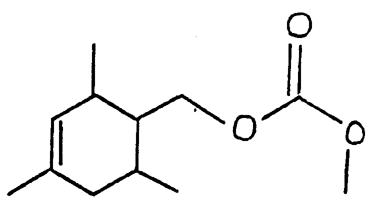 for use in insect traps as the case may be) are as follows:
(i) Under high pressure, ethylene, methane, propane, butane, propylene, methyl chloride, methyl bromide, vinyl chloride and methylene dichloride as more specifically described in U.S. Letters Patent No. 2,387,730;
(ii) Ordinarily liquid material such as n-pentane, isopentane, cyclopentane, hexane and petroleum ether fractions or halogen hydrocarbons such as CFCl₃, CF₂CI₂, CHₛCl, CH₂CI₂ separately or in admixture with one another as set forth in U.S. Letters Patent No. 3,758,425, column 4, line 1-5;
(iii) Dichlorotetrafluoromethane, tetramethylmethane, monochlorodifluoromethane, dichlorodifluoromethane, and dichlorotetrafluoromethane as described in U.S. Letters Patent Nos. 2,948,664 and 2,948,665 issued on August 9, 1990; and
(iv) Azo bis(formamide), diazoaminobenzene; N,N-dinitrosopentamethylene tetramine; N,N-dimethyl, N,N-dinitro- soterephthalamide; p,p'-oxy-bis-(benzen sulfonyl semicarbazide); aza bis-(isobutyronitrile)p,p'-oxy-bis(benzene sulfonyl hydrazide); p,p'-diphenyl-bis(sulfonyl hydrazide); benzene -sulfonyl hydrazide; m-benzene-bis(sulfonyl hydrazide) as more specifically described in U.S. Letters Patent No. 3,298,975 issued on January 17, 1967.

The resulting extruded (and, if desired, pelletized) material may then be, for example, injection molded to form a useful article. Such injection molding can be carried out in accordance with the procedure as set forth in U.S. Letters Patent No. 3,268,636 issued on August 23, 1966.

In addition, candle body materials which on use are both insect repellent and perfuming may contain the appropriate insect repellent-containing compositions of our invention and, if desired, other insect repellent materials including, for example, at least one of the compounds having the structure: 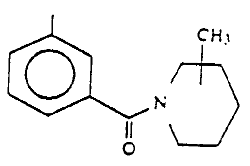 in order to repel house flies (Musca domestica L. (Diptera:Muscidae)) and/or the mosquitoes, Aedes aegypti. and/or the insect species:
Culex niaripalious;
Aedes atlanticus;
Culex salinarius;
Aedes vexans;
Culex spp.;
Simulium spp.;
Psoroferia ferox;
Aedes infirmatus;
Drosophila melanoaaster;
Coccinellidae;
Anopheles crucians;
Psoroferia columbiae;
Culicoides spp.; and
Aedes spp.

and/or the Horn fly, Haematobia irritans [L.].

The house fly, Horn fly and mosquito-repellent-perfuming compositions which form part of the candle body materials are within the following specifications:
(I) from 5 up to 100% by weight of an efficacious perfuming/insect repellent composition containing an appropriate insect repellent-containing composition of our invention; and
(II) from 0 up to 95% by weight of an additional standard perfuming substance (non-insect repellent or insect repellent) which may include but is not limited to:
   1-nonen-3-ol;
   1-octen-4-ol;
   alpha-damascone;
   beta-damascone;
   delta-damascone;
   trans,trans delta-damascone;
   methyl jasmonate;
   dihydromethyl jasmonate;
   the schiff base of vanillin and methyl anthranilate;
   the schiff base of ethyl vanillin and methyl anthranilate;
   vanillin; and
   ethyl vanillin.

The foregoing formula may require a solubilizing agent, e.g., the methyl ester of dihydroabietic acid (commerical name: HERCOLYN D^{®}), benzyl benzoate, isopropyl myristate and/or C₁₂-C₁₄ isoparaffin hydrocarbons.

The candle base composition can be standard paraffin wax, or it can be transparent or pastel shaded as more particularly described in U.S. Letters Patent No. 3,615,289 issued on October 26, 1971 and wherein the candle body comprises as the basic components a mixture of:
(i) a thermoplastic polyamide resin formed from linoleic acid polymerized with a polyamine compound;
(ii) an alkanol amide or alkanol amine; and
(iii) a stearic acid compound.

The weight ratio of candle body:insect repellentlperfumant substance may vary from about 0.8% up to about 10% with a range of from about 0.8% up to about 2.0% being preferred when no additional non-insect repelling perfume oil is used in conjunction with the appropriate insect repellent-containing composition of our invention; and with a range of from about 1.5% up to about 10% by weight of the overall composition being preferred when an additional non-insect repelling perfume oil is used in conjunction with the appropriate insect repellent-containing composition of our invention.

Specifically, the polyamide may be a "VERSAMID^{®} resin which is a thermoplastic condensation product of polymerized linoleic acid with various polyamine compounds such as ethylene diamine, ethylene triamine and the like. Specific "VERSAMID^{®} compounds are "VERSAMID^{®} 900", "VERSAMID^{®} 930", "VERSAMID^{®} 940", "VERSAMID^{®} 948", "VERSAMID^{®} 950" and "VERSAMID^{®} 1635". These compounds are products of the Henkel Chemical Corporation of Minneapolis, Minnesota.

Another substance required in the clear candle composition consists of about 20-55% by weight of an alkanol amine or alkanol amide prepared by the reaction of a fatty acid ester and amine whereby the ester and the amine are in substantially equal proportions, for example, compounds such as BARLOL^{®} 12C2 (manufactured by the Baroid Chemical Company) a monoalkyl diethanolamine having 8 to 18% carbon atoms in the alkyl chain. A third component of the clear plastic candle composition comprises one or more stearic acid esters or a mixture of stearic acid esters and stearic acid. These esters include such compounds as isopropyl isostearate, butyl stearate and hexadecyl stearate. These stearic acid compounds serve as stabilizing agents which permit the ready incorporation of the insect repellent/perfumant compositions up to a level of approximately 5% (total proportion of perfume oil-insect repellent composition). They are carriers for the perfumant/insect repellent and may be used in a proportion of between 1 and 50% by weight of the composition although the preferable range is between 20 to 30%. In this connection it is possible to use up to about 10% by weight of a perfumant/insect repellent if part of the formula is replaced by the material "NEVEX^{®} 100", a product which is a coumarin-in-dene copolymer resin of very little unsaturation manufactured by the Neville Chemical Company

Rather than being a crystalline paraffin wax the candle base may be an oil gel that has as its base a light mineral oil, an inexpensive natural oil or a combination of such oils which oil gel has a non-greasy surface and feel and sufficient rigidity to be self-supporting at room temperature. Such a gel is disclosed in U.S. Letters Patent No. 3,645,705 issued on February 29, 1972. Such compositions of matter include:
(a) from about 35% up to about 85% by weight of an oil which is normally liquid at room temperature chosen from the group consisting of light mineral oils and natural oils having iodine values substantially within the range of 40-135;
(b) from about 7% up to about 40% by weight of a long chain polyamide having a molecular weight substantially within the range of 6000-9000 and a softening point substantially within the range of 18°C-48°C; and
(c) from about 7% up to about 30% of an alcohol selected from the group consisting of 8 to 12 carbon primary alcohols.

Similarly, when used in insect traps, the attractant disclosed herein having the structure: 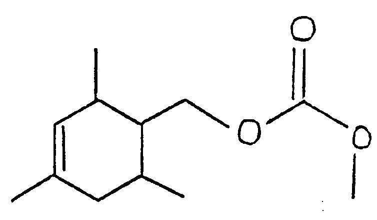 can be used in the same polymers as the repellents. Thus, for example, the attractant having the structure: 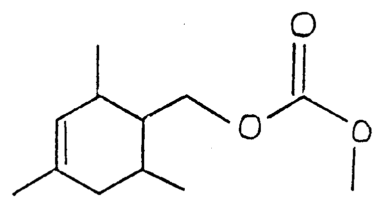 (at a level of from about 1% up to about 45% by weight of the polymer composition) may be imbedded in the interstices of a microporous polymer which may be one of the polymers as set forth, supra.

Furthermore, the insect attractant-containing polymers disclosed herein may be insect attractant-containing biodegradable polymers as set forth, supra.

### BRIEF DESCRIPTION OF THE DRAWINGS

Fiaure 1 A is a series of graphs depicted in three dimensions (in a rectangular mode for the "X" and "Y" axes) showing the relative attractiveness or repellency of air, FLORALOL having the structure: 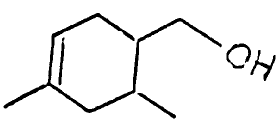 and ISOCYCLOGERANIOL having the structure: 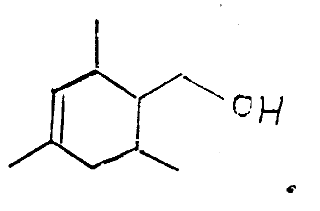 The graphs are based on experiments run for a period of one hour with six intervals of ten minutes each using as the insect to be tested the mosquito, Aedes aegypti. The results are tabulated in Table I(A), infra.

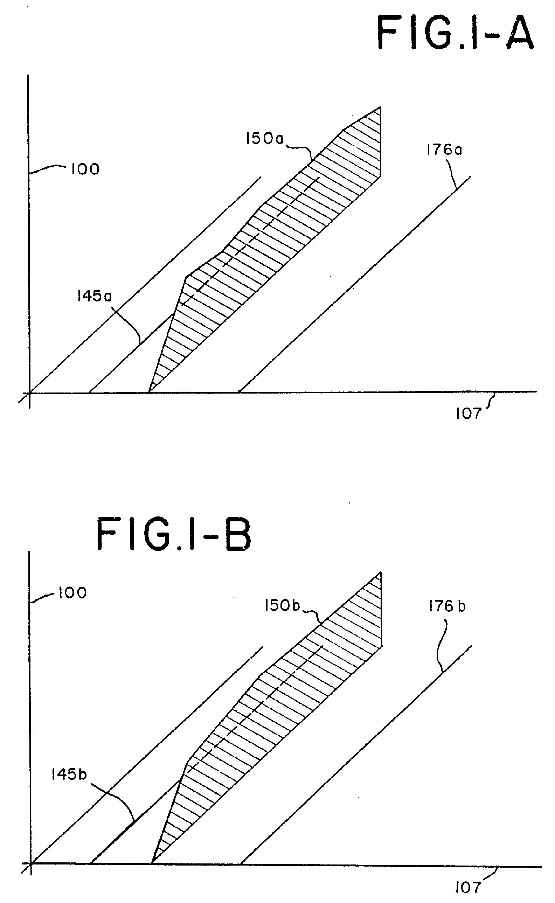

Figure 1 B is a series of graphs depicted in three dimensions (in a rectangular mode for the "X" and "Y" axes) showing the relative attractiveness or repellency of air, FLORALOL having the structure: 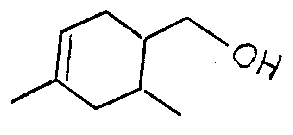 and ISOCYCLOGERANIOL having the structure: 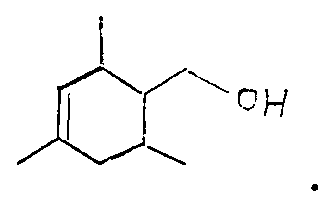 The graphs are based on experiments run for a period of six hours with six intervals of one hour each using as the insect to be tested the mosquito, Aedes aegipti. The results are tabulated in Table I(B), infra.

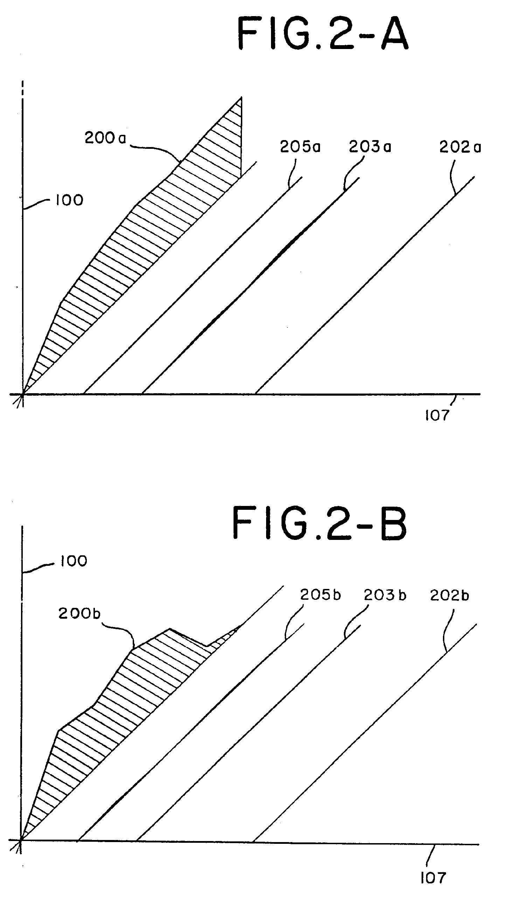

Figure 2A is a series of graphs depicted in three dimensions (in a rectangular mode for the "X" and "Y" axes) showing the relative attractiveness or repellency of air, ISOCYCLOGERANIOL having the structure: 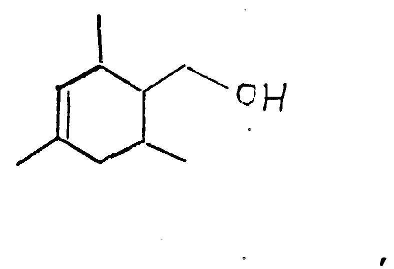 FLORALATE having the structure: 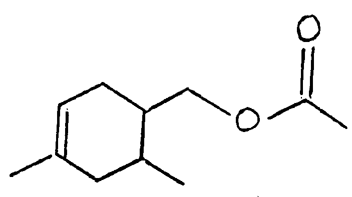 and DIHYDROFLORALOL having the structure: 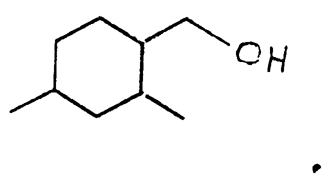 The graphs are based on experiments run for a period of one hour with six intervals of ten minutes each using as the insect to be tested the mosquito, Aedes aegipti. The results are tabulated in Table II(A), infra.

Figure 2B is a series of graphs depicted in three dimensions (in a rectangular mode for the "X" and "Y" axes) showing the relative attractiveness or repellency of air, ISOCYCLOGERANIOL having the structure: 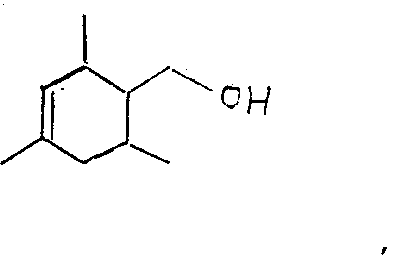 FLORALATE having the structure: 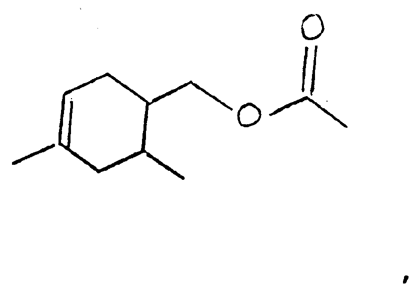 and DIHYDROFLORALOL having the structure: 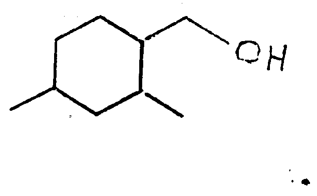 The graphs are based on experiments run for a period of eighteen hours with six intervals of three hours each using as the insect to be tested the mosquito, Aedes aegipti. The results are tabulated in Table II(A), infra.

Figures is a series of graphs depicted in three dimensions (in a rectangular mode for the "X" and "Y" axes) showing the relative attractiveness or repellency of air and DIHYDROFLORALOL having the structure: 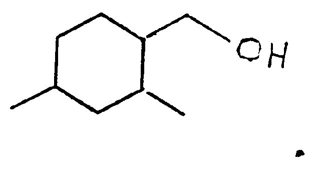 The graphs are based on experiments run for a period of one hour with six intervals of ten minutes each using as the insect to be tested the Horn fly, Haematobia irritans [L.]. The results are tabulated in Table III, infra.

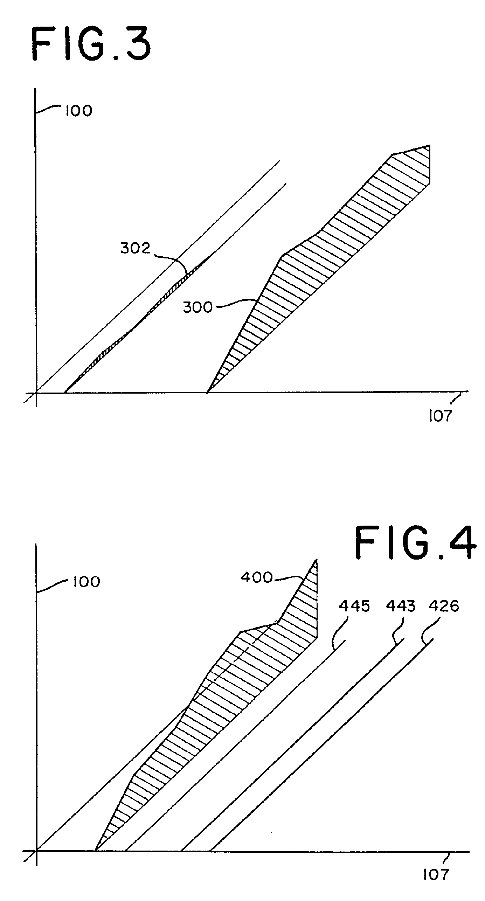

Figure 4 is a series of graphs depicted in three dimensions (in a rectangular mode for the "X" and "Y" axes) showing the relative attractiveness or repellency of air, ISOCYCLOGERANIOL having the structure: 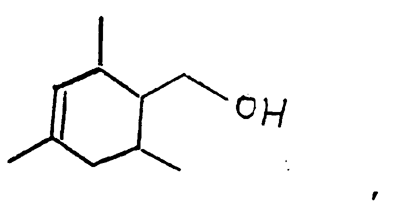 FLORALATE having the structure: 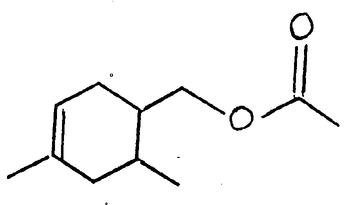 and FLORALOL having the structure: 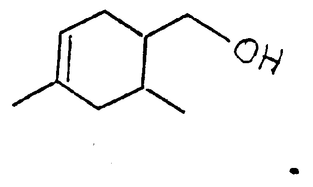 The graphs are based on experiments run for a period of one hour with six intervals of ten minutes each using as the insect to be tested the Horn fly, Haematobia irritans [L.]. The results are tabulated in Table IV, infra.

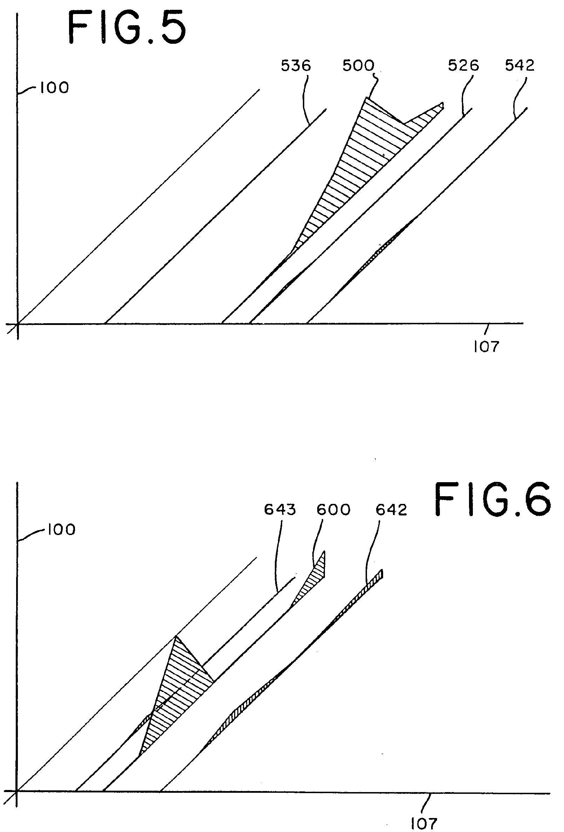

Figure 5 is a series of graphs depicted in three dimensions (in a rectangular mode for the "X" and "Y" axes) showing the relative attractiveness or repellency of air, CAMEKOL DH having the structure: 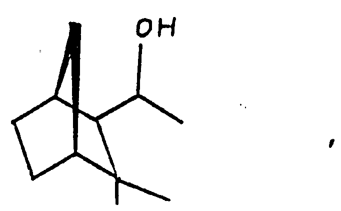 FLORALOL having the structure: 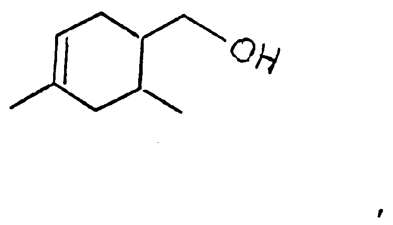 and DIHYDROFLORALOL having the structure: 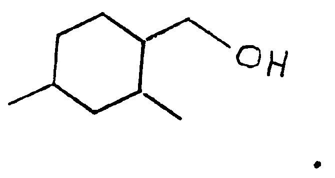 The graphs are based on experiments run for a period of one hour with six intervals of ten minutes each using as the insect to be tested the Horn fly, Haematobia irritans [L.]. The results are tabulated in Table V, infra.

Figure 6 is a series of graphs depicted in three dimensions (in a rectangular mode for the "X" and "Y" axes) showing the relative attractiveness or repellency of air, FLORALATE having the structure: 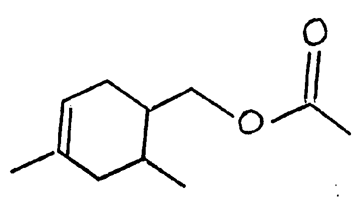 and DIHYDROFLORALOL having the structure: 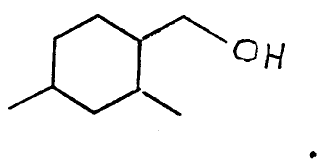 The graphs are based on experiments run for a period of one hour with six intervals of ten minutes each using as the insect to be tested the house fly, Musca domestica L.(Diptera:Muscidae). The results are tabulated in Table VI, infra.

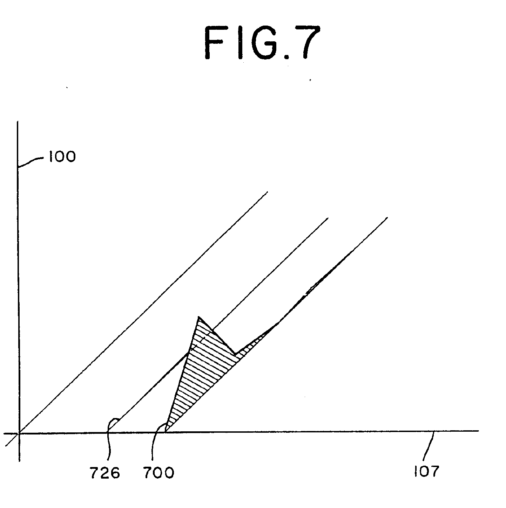

Figure 7 is a series of graphs depicted in three dimensions (in a rectangular mode for the "X" and "Y" axes) showing the relative attractiveness or repellency of air and FLORALOL having the structure: 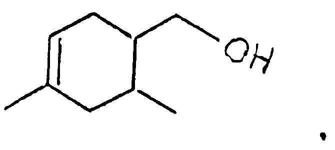 The graphs are based on experiments run for a period of one hour with six intervals of ten minutes each using as the insect to be tested the house fly, Musca domestica L.(Diptera:Muscidae). The results are tabulated in Table VII, infra

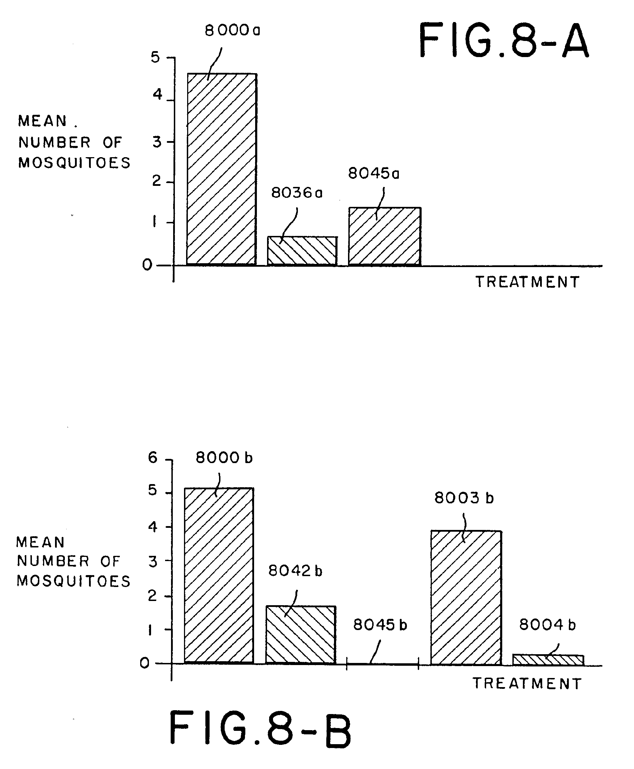

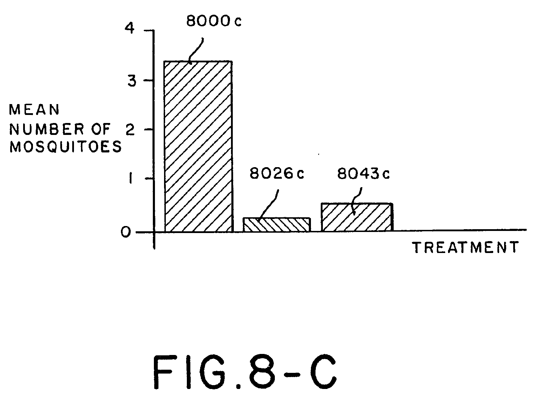

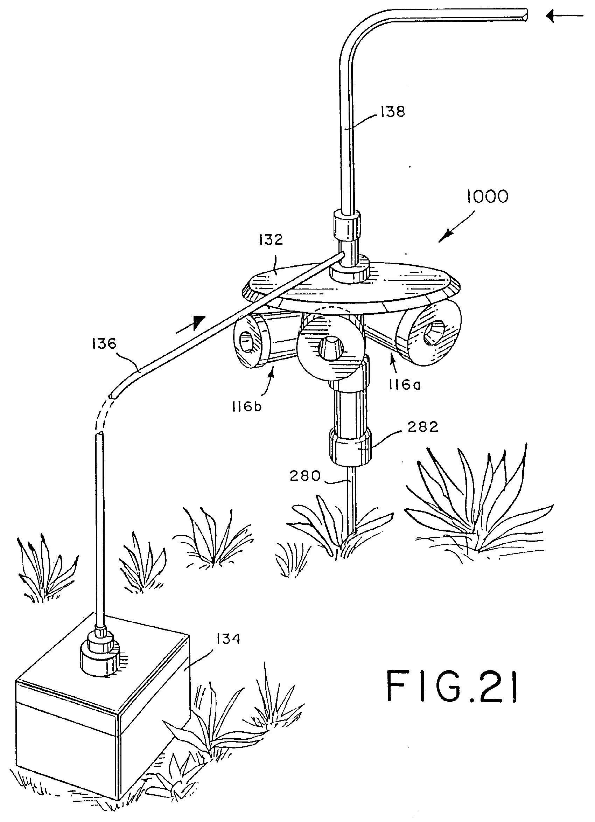

Figure 8A is a bar graph showing the mean number of insects attracted (on the "Y" axis) versus the treatment substance (on the "X" axis) using the semiochemical field trap of Figure 21 with six ports and three infra-red light emitting diodes, showing treatment with:
(i) a 50:50 mixture of air and C0₂;
(ii) CAMEKOL DH having the structure: 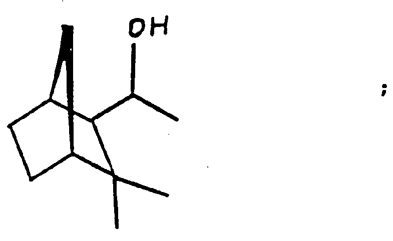 and
(iv) ISOCYCLOGERANIOL having the structure:

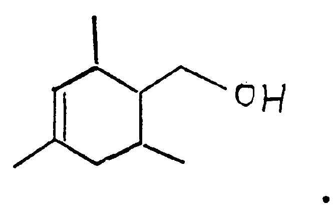

The insects measured using the apparatus of Figure 21 are as follows:
Culex niari^{p}alpus;
Aedes atlanticus;
Culex salinarius;
Aedes vexans;
Culex spp.;
Simulium spp.;
Psoroferia ferox;
Aedes infirmatus;
Drosophila melanogaster;
Coccinellidae;
Anopheles crucians;
Psoroferia columbiae;
Culicoides spp.; and
Aedes spp..

Fioure 8B is a bar graph showing the mean number of insects (on the "Y" axis) trapped versus treatment substance (on the "X" axis) using the semiochemical field trap of Figure 21 having six ports with three infra-red light emitting diodes. The treatment substances used are:
(i) a 50:50 mixture of air and C0₂;
(ii) DIHYDROFLORALOL having the structure: 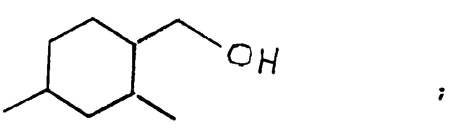
(iii) ISOCYCLOGERANIOL having the structure: 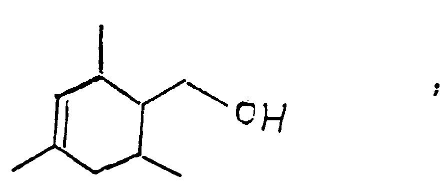
(iv) the compound having the structure: 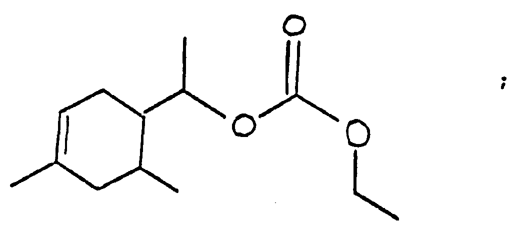 and
(v) the compound having the structure: 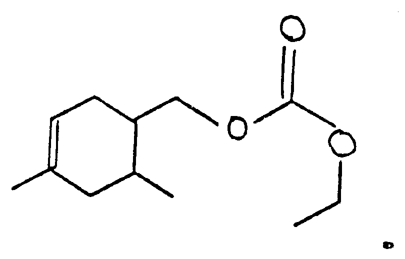 The insects measured as to attractiveness or repellency are as follows:
   Culex nigripalpuls
   Aedes atlanticus;
   Culex salinarius;
   Aedes vexans;
   Culex app.;
   Simulium spp..
   Psoroferia ferox;
   Aedes infirmatus;
   Drosophila melanogaster;
   Coccinellidae;
   Anopheles crucians;
   Psoroferia columbiae;
   Culicoides spp.; and
   Aedes spp..

Figure 8C is a bar graph showing the mean number of insects attracted (on the "Y" axis) versus treatment substance (on the "X" axis) using the semiochemical field trap of Figure 21 (described, infra) using treatment substances:
(i) a 50:50 mixture of air and C0₂;
(ii) FLORALOL having the structure: 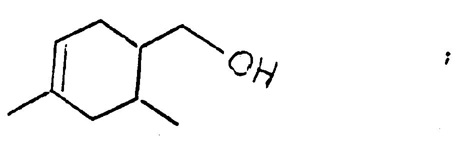 and
(iii) FLORALATE having the structure:

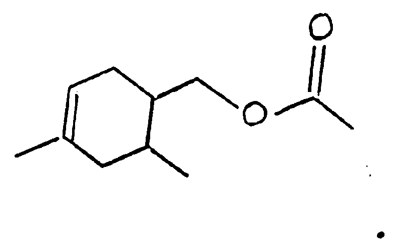

The attractancy or repellency is measured for the following insect species:
Culex ni^{g}ri^{p}alpus;
Aedes atlanticus;
Culex salinarius;
Aedes vexans;
Culex spp.;
Simulium spp.:
Psoroferia ferox;
Aedes infirmatus;
Drosophila melanogaster;
Coccinellidae;
Anopheles crucians;
Psoroferia columbiae;
Culicoides spp.; and
Aedes spp..

Figure 9 is a cut-away side elevation schematic diagram of a screw extruder during the compounding of a resin with insect attractants or repellents including the insect repellent-containing compositions of our invention, while simultaneously adding foaming agent into the hollow portion of the barrel of the extruder, and incorporates the pelletizing apparatus used in the pelletizing of the extruded foamed tow product produced as a result of the extrusion operation.

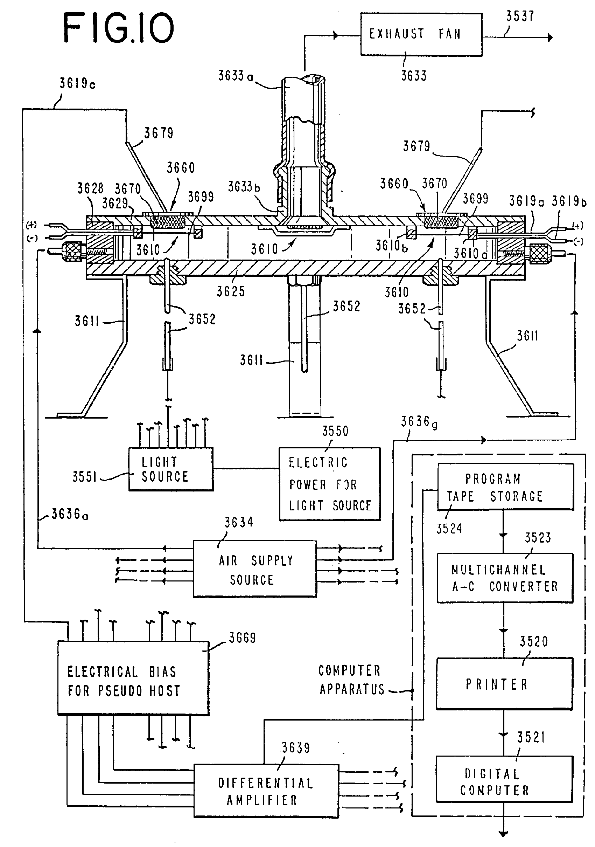

Figure 10 is a cut-away side elevation view of the base section of the olfactometer apparatus of U.S. Letters Patent 5,134,892 used in carrying out the testing of the attractants disclosed herein or repellents of our invention, indicating in schematic block flow diagram form the utilization of computer-assisted efficacy measuring apparatus; but showing only an air supply entry into the side ports of the olfactometer apparatus with the treatment agent being contained in a control release matrix upstream from the air supply source.

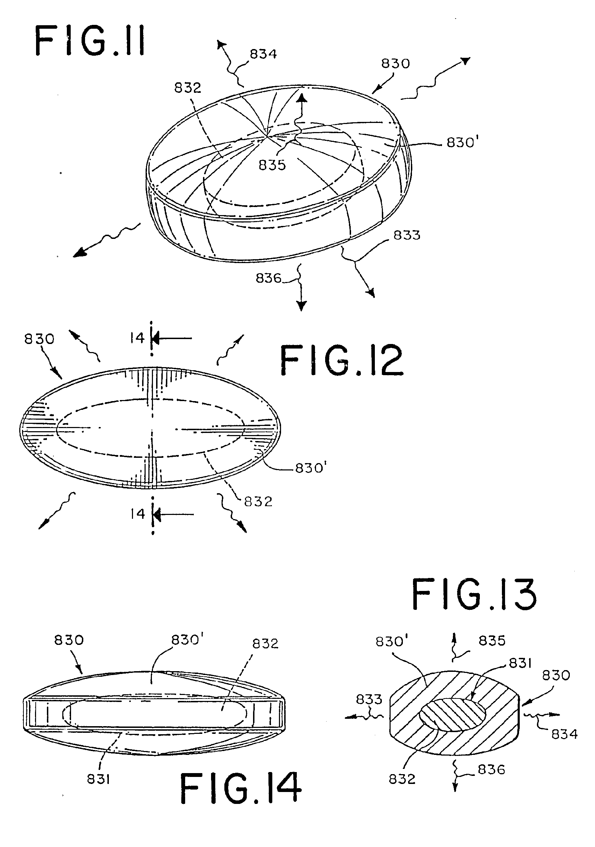

Figure 11 is a perspective view of an ellipsoidally shaped detergent tablet containing a solid core which includes fused foamed polymeric particles which contain insect repellents which are one of the insect repellent-containing compositions of our invention and, if desired, also containing an additional polymer, e.g., polyethylene. The polymer particles may, if desired, also contain additional aromatizing agents.

Figure 12 is the top view of the ellipsoidally-shaped detergent tablet of Figure 11.

Fiaure 13 is a cut-away front view of the ellipsoidally-shaped detergent tablet of Figure 11 in the direction of the arrows in Figure 12.

Figure 14 is a side-view of the ellipsoidally-shaped detergent tablet of Figure 11.

Figure 15 is a perspective view of a rectangular parallelepiped-shaped detergent tablet containing a rectangular parallelepiped-shaped core comprising a major proportion of fused foamed polymeric particles which contain insect repellents (e.g., one of the insect repellent-containing compositions of our invention) and may or may not be additionally aromatized and, if desired, an additional polymer which may or may not contain insect repellent compositions and which may or may not be additionally aromatized.

Figure 16 is a top view of the rectangular parallelepiped-shaped detergent tablet of Figure 15.

Figure 17 is a cut-away front view of the rectangular parallelepiped-shaped tablet of Figure 15 looking in the direction of the arrows in Figure 16.

Figure 18 is a perspective view of an ellipsoidally-shaped detergent tablet containing a hollow insect repellent agent (and if desired, an additional aromatizing agent) containing core which includes fused foamed polymeric particles containing insect repellent and if desired additional aromatizing agent or, in the alternative, a hollow core of fused foamed polymer wherein the insect repellent which is also an aroma imparting agent (and if desired, an additional aroma imparting agent) is in the solid polymer and not in the void of the plastic core.

Figure 19 is a top view of the ellipsoidally-shaped detergent tablet of Figure 18.

Figure 20 is a front cut-away view of the ellipsoidally-shaped detergent tablet of Figure 18 looking in the direction of the arrows in Figure 19, the core thereof being hollow and either containing an insect repellent material of our invention (and if desired, an additional aroma imparting liquid) or in the alternative being a hollow core wherein the insect repellent material of our invention (and if desired, the additional aroma imparting material) is in the solid fused foamed polymeric particles which make up the core and wherein the void does not contain anything.

Figure 21 is a perspective view of the semiochemical field trap for testing the attractiveness or repellency for blood feeding arthropods using the insect repellent-containing repellency compositions of our invention or the attractant which is the compound having the structure:

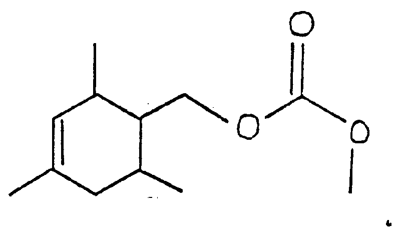

The semiochemical field trap is described in detail in Application for U.S. Letters Patent, Serial No. 887,138 filed on May 22, 1992.

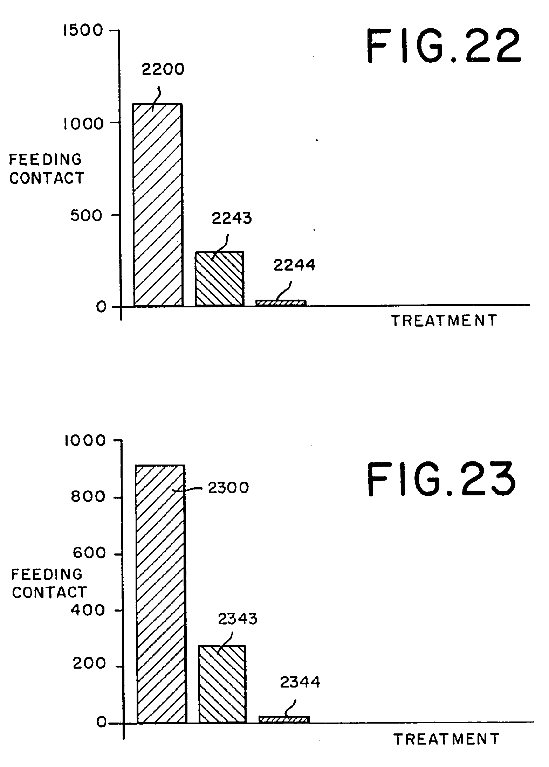

Figure 22 is a bar graph showing the mean number of feeding contacts (on the "Y" axis) versus the particular treatment substance (on the "X" axis) for air, FLORALATE having the structure: 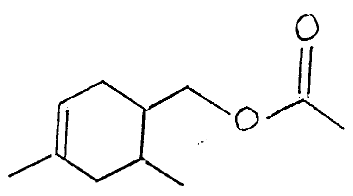 and geraldehyde having the structure: 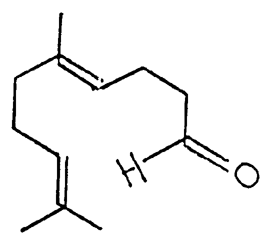 for a mean feeding contact time of one hour.

Figure 23 is a bar graph showing the mean number of feeding contacts (on the "Y" axis) versus the particular treatment substance (on the "X" axis) for air, FLORALATE having the structure: 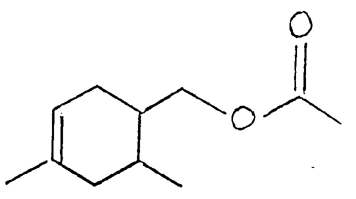 and geraldehyde having the structure: 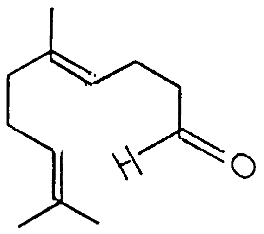 for a mean 2-6 hour feeding contact time.

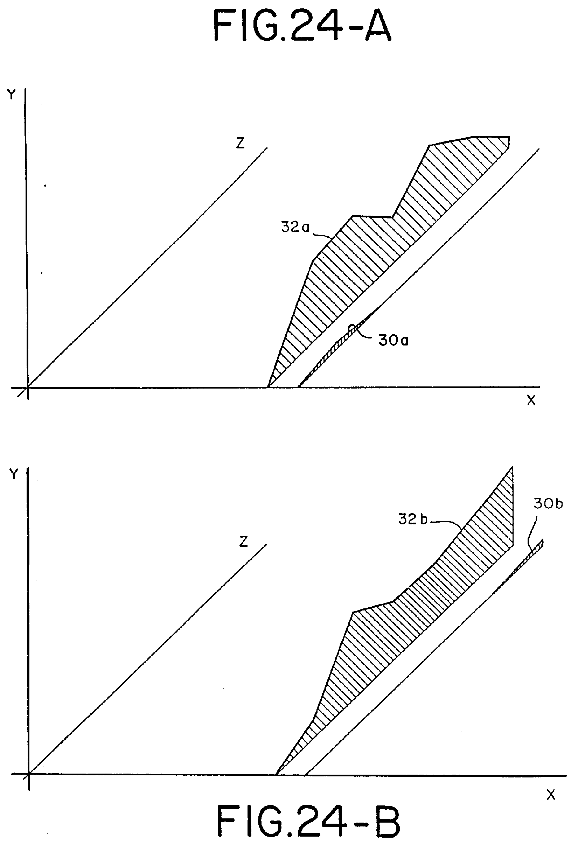

Figure 24A is a series of graphs depicted in three dimensions (in a rectangular mode for the "x" and "y" axes) showing the relative attractiveness or repellency for mosquitoes (Aedes aegyptae )of the compositions of matter:
(i) air; and
(ii) the compound having the structure: 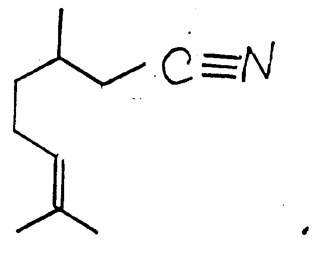 The graphs are based on experiments run for a total of 1 hour with six intervals of 10 minutes each. The results are tabulated in Table VIII(A), infra.

Figure 24B is a series of graphs depicted in three dimensions (in a rectangular mode for the "x" and "y" axes) showing the relative attractiveness or repellency for mosquitoes (Aedes aegytae) of the compositions of matter:
(i) air; and
(ii) the compound having the structure: 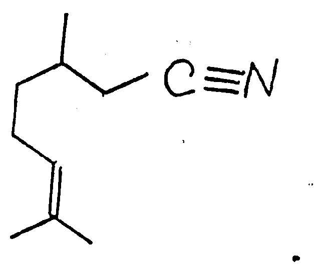 The graphs are based on experiments run for a total of 6 hours with six intervals of 1 hour each. The results are tabulated in Table VIII(B), infra.

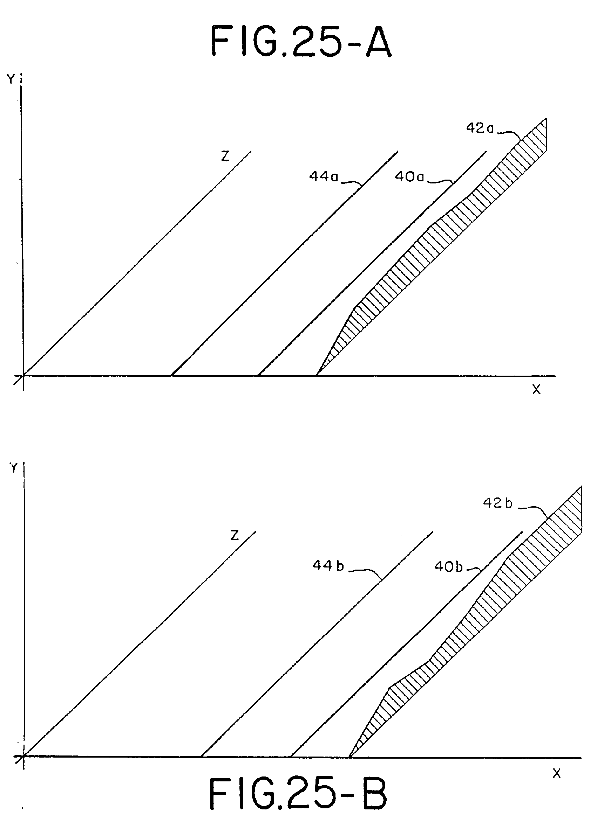

Figure 25A is a series of graphs depicted in three dimensions (in a rectangular mode for the "x" and "y" axes) showing the relative attractiveness or repellency for mosquitoes (Aedes aegyptae) of the compositions of matter:
(i) air;
(ii) a mixture of compounds containing 81 mole percent of geraniol having the structure: 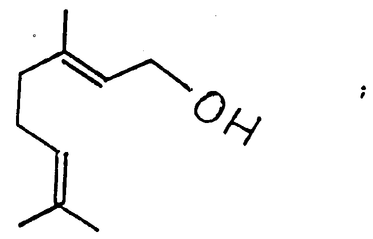 14 mole percent nerol having the structure: 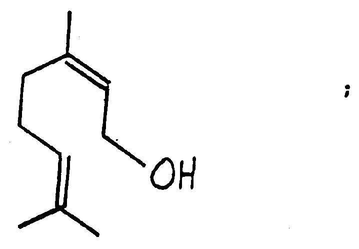 5 mole percent citronellol having the structure: 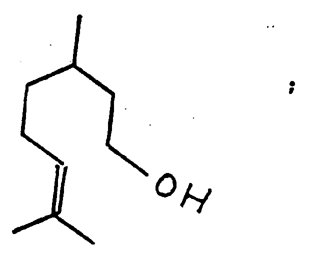 and
(iii) the compound having the structure: 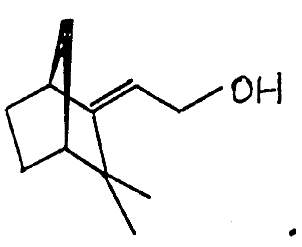 The graphs are based on experiments run for a total of 1 hour with six intervals of 10 minutes each. The results are tabulated in Table IX(A), infra.

Figure 25B is a series of graphs depicted in three dimensions (in a rectangular mode for the "x" and "y" axes) showing the relative attractiveness or repellency for mosquitoes (Aedes aegyptae) of the following compositions of matter:
(i) air;
(ii) a mixture of compounds containing 81 mole percent of geraniol having the structure: 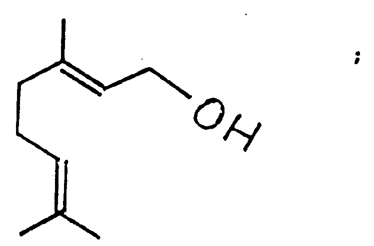 14 mole percent of nerol having the structure: 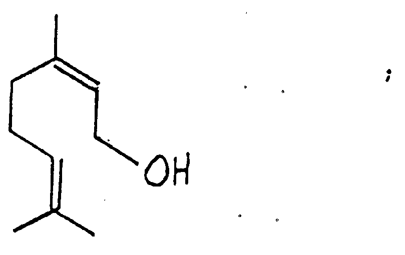 and 5 mole percent citronellol having the structure: 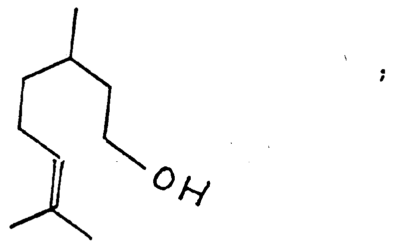 and
(iii) the compound having the structure: 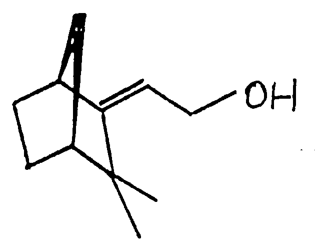 The graphs are based on experiments run for a total of 6 hours with six intervals of 1 hour each. The results are tabulated in Table IX(B), infra.

Fiaure 26A is a series of graphs depicted in three dimensions (in a rectangular mode for the "x" and "y" axes) showing the relative attractiveness or repellency of methyl anthranilate having the structure: 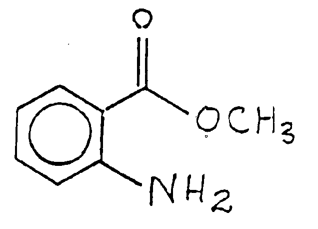 and air for mosquitoes (Aedes aeqyptae). The graphs are based on experiments run for a period of one hour with 6 intervals of 10 minutes each using as the insect to be tested the mosquito (Aedes aeqyptae). The results are tabulated in Table X(A), infra.

Fiaure 26B is a series of graphs depicted in three dimensions (in a rectangular mode for the "x" and "y" axes) showing the relative attractiveness or repellency for mosquitoes (Aedes aeqyptae) of methyl anthranilate having the structure: 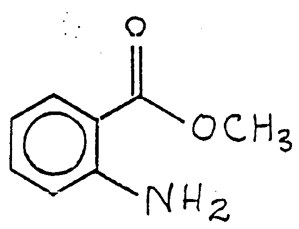 and air. The graphs are based on experiments run for a total of 6 hours with 6 intervals of 1 hour each. The results are tabulated in Table X(B), infra.

Fiaure 26C is a series of graphs depicted in three dimensions (in a rectangular mode for the "x" and "y" axes) showing the relative attractiveness or repellency for mosquitoes (Aedes aeqyptae) of methyl anthranilate and air. The graphs are based on experiments run for a total of 12 hours with 6 intervals of 2 hours each. The results are tabulated in Table X(C), infra.

Fiaure 27A is a series of graphs depicted in three dimensions (in a rectangular mode for the "x" and "y" axes) showing the relative attractiveness or repellency for mosquitoes (Aedes aeqyptae) of LAVONAX™ having the structure: 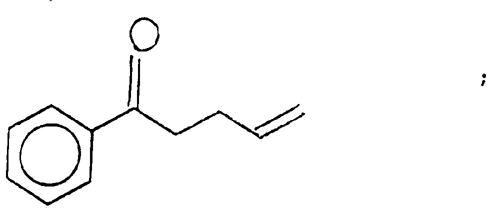 and MELOZONE™ defined according to the structure: 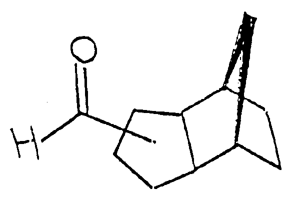 (a 50:50 mixture of the compounds having the structures: 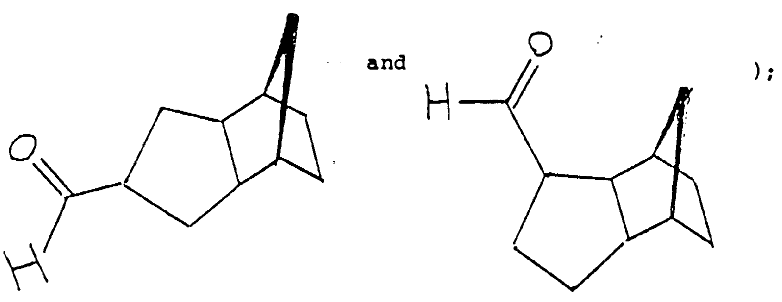 and a mixture containing 81 mole percent of geraniol having the structure: 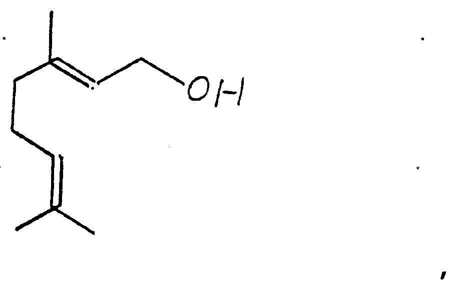 14 mole percent of citronellol having the structure: 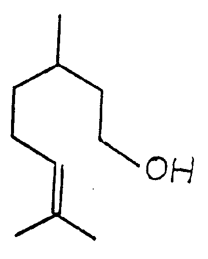 and 5% nerol having the structure: 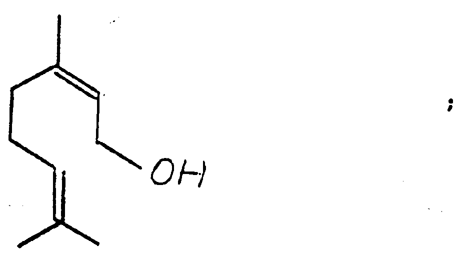 and air. The graphs are based on experiments run for a total of 1 hour with 6 intervals of 10 minutes each. The results are tabulated in Table XI(A), infra.

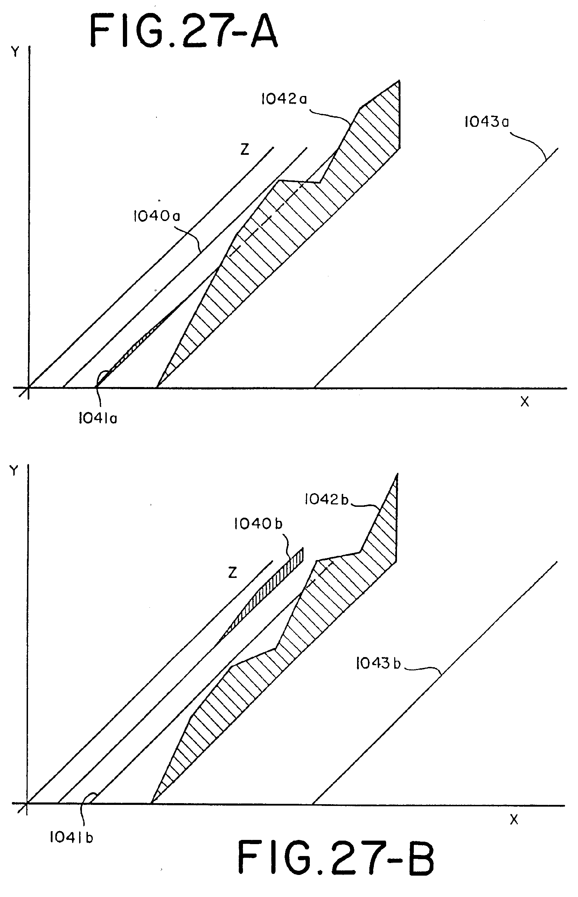

Figure 27B is a series of graphs depicted in three dimensions (in a rectangular mode for the "x" and "y" axes) showing the relative attractiveness or repellency for mosquitoes (Aedes aegyptae) of LAVONAX™; MELOZONE™; air; and the mixture of compounds, to wit:
81 mole percent geraniol having the structure: 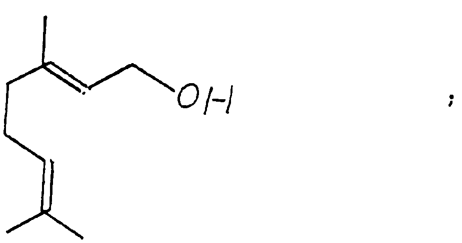
14 mole percent citronellol having the structure: 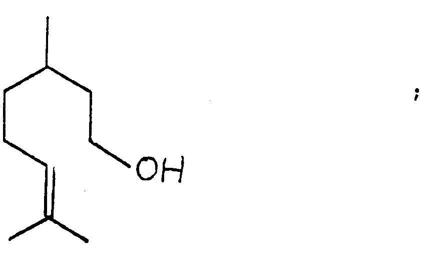
and 5 mole percent nerol having the structure:

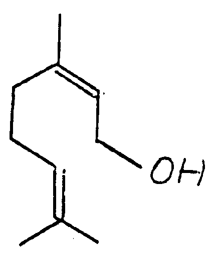

The graphs are based on experiments run for a total of 6 hours with 6 intervals of 1 hour each. The results are tabulated in Table XI(B), infra.

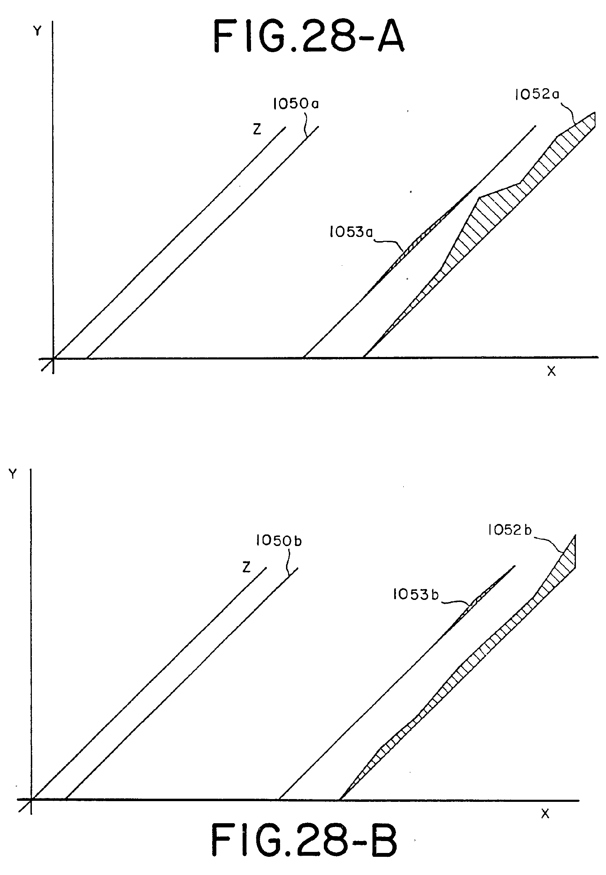

Figure 28A is a series of graphs depicted in three dimensions in a rectangular mode for the "x" and "y" axes) showing the relative attractiveness or repellency of:
"CYCLEMONE A™", a mixture containing 51 mole percent of the compound having the structure: 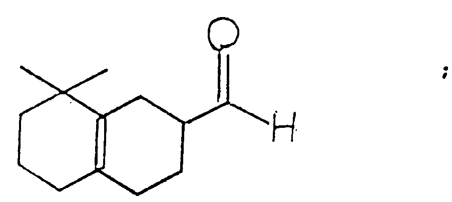 17 mole percent of the compound having the structure: 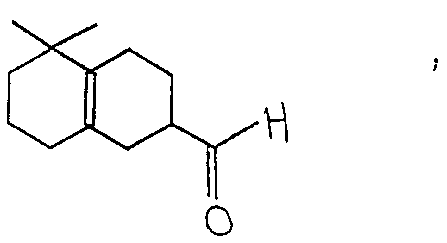 and 32 mole percent of the compound having the structure: 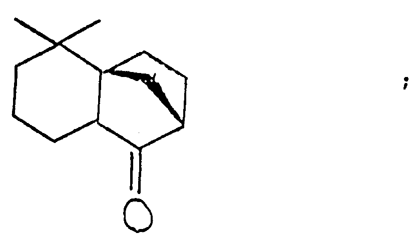 air and a mixture containing 81.8% geraniol having the structure: 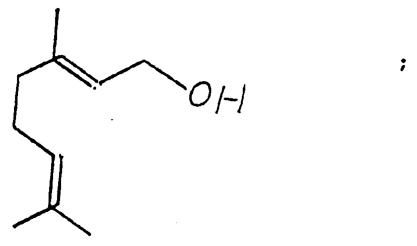 11.66 mole percent citronellol having the structure: 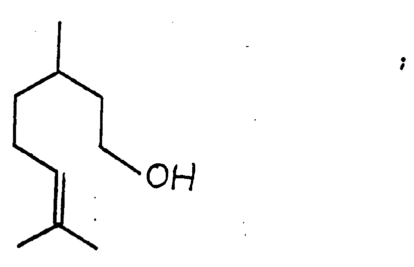 and 6.53 mole percent nerol having the structure: 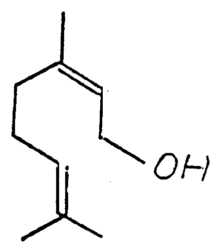 The graphs are based on experiments run for a total of 1 hour with 6 intervals of 10 minutes each. The results are tabulated in Table XII(A), infra.

Figure 28B is a series of graphs depicted in three dimensions (in a rectangular mode for the "x" and "y" axes) showing the relative attractiveness or repellency of CYCLEMONE A™"; air; and a mixture containing 81.8% geraniol having the structure: 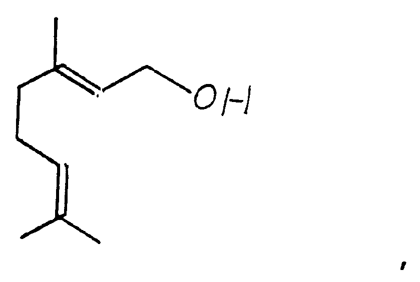 11.66 mole percent citronellol having the structure: 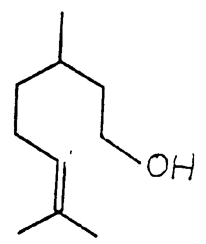 and 6.53 mole percent nerol having the structure: 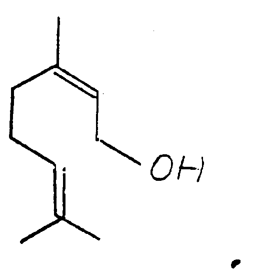 The graphs are based on experiments run for a total of 6 hours with 6 intervals of 1 hour each. The results are tabulated in Table XI I(B), infra.

### DETAILED DESCRIPTION OF THE DRAWINGS

The data set forth in Figures 1 A, 1 B, 2A, 2B, 3, 4, 5, 6, 7, 8, 8A, 8B, 8C, 22, 23, 24A, 24B, 25A, 25B, 26A, 26B, 26C, 27A, 27B, 28A and 28B were determined using the olfactometer of Figure 10 and the insect trap of Figure 21.

Referring to the olfactometer of Figure 10, said olfactometer is described in detail in U.S. Letters Patent No. 5,118,711 issued on June 2, 1992.

Referring to Figure 10, air supply source 3634 provides air to mixing station 3636 wherein the air is mixed with treatment agent from treatment agent source 3635 (source of, for example, the repellent composition which is an appropriate insect repellent-containing composition or the attractant having the structure: 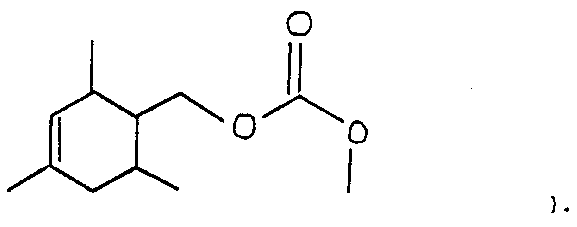 The resulting mixture passes through tube 3636^{g} and enters the apparatus through the side portals. The entry is through a spacer plate and above base plate 3625. The entry of the air-treatment agent is in a direction parallel to the surface of base plate 3625. Thus, the base plate 3625 is separated from spacer plate 3629 for the air-treatment agent (e.g., the appropriate insect repellent-containing composition of our invention).

Air exits through line 3633a using exhaust fan 3633. The air exit is indicated by reference numeral 3537.

Simultaneously, with the supplying of air and treatment agent from mixing station 3636, light is supplied from beneath the enclosed insect feeding and/or stimulating means through light guides 3652, from light source 3551 which is powered by electric power supply 3550 marketed by RADIO SHACK@ Division of Tandy Corporation of Fort Worth, Texas 76102 under the trademark ARCHER@, Catalog No. 276-228 ("1.0 mm optical plastic fiber length 5 meter"). An example of light source 3551 is KRATOS Monochromatic Illuminator GM 100 Miniature VIS-IR Grating Monochromator (Model No. GM 100-1, GM 100-2, GM 100-3 or GM 100-4) as manufactured by KRATOS Analytical Instruments Corporation, 170 Williams Drive, Ramsey, New Jersey 07446. Another light supply source is the KRATOS GM 200 Double Grating Monochromator. Another example of a useful light source is the KRATOS GM 252 High Intensity Grating Monochromator. The base plate 3625 is also separated from the spacer plate 3629 for the light guides 3652 whereby the light guides 3652 are held in place in the base plate 3625 whereby the light (or other forms of radiation) is directed in a direction perpendicular to the electrical sensor element 3610. Air supply source from location 3634 and treatment agent from location 3635 is mixed at mixing station 3636 whereupon treatment agent and air in admixture is passed through lines 3636a and 3636a through portals located in the spacer element 3628 in a direction along a directional vector parallel to the electrical sensing element 3610 held in place by holders 3610a and 3610b. The electrical sensing elements are located directly below the horizontally positioned insect feeding and/or stimulating microporous substantially planar lamina 3670 which is held in place by ring 3660 located on spacer plate 3629 spaced from the base plate 3625 by spacer ring 3628. It should be noted that the spacer plate 3629, spacer ring 3628 and base plate 3625 enclose the entire "enclosed insect feeding and/or stimulating means" which have controlled limited access to the external environment surrounding the apparatus and in which the insects to be tested, e.g., mosquitoes, Horn flies or house flies are placed.

The insect attractant quantitative detecting means made up of wires 3699 (the entire grid being denoted using reference numeral 3610) is located immediately beneath the porous membrane 3670, the outer surface of which contains a feeding stimulant composition or stimulant composition for insects (for example, agar). Immersed in the feeding stimulate composition or stimulant composition for insects (e.g., agar) is electrode 3679 connected to wire 3619 which connects with either wire 3619a or 3619b which is connected to the grid wires 3699 (which make up the insect attractant quantitative detecting means located immediately below lamina 3670).

As stated, supra, the sensor causes an electrical impulse caused by the pressure of the insects landing to proceed through wires 3619a and 3619b to an electrically biased differential amplifier 3639 (using electrical power supply 3539) also connected to wire 3619c which is connected to the electrode 3679 which is immersed in the feeding stimulant composition or stimulant for the insect and then to a multi-channel A.C. converter 3523. Converter 3523 is associated with program tape storage 3524, printer 3520 and data link to digital computer 3521. Differential amplifer 3639 is connected in series to electrical bias for psuedo host 3669 which in turn is connected to wire 3619 which in turn is connected to the electrode 3679 immersed in the insect stimulant composition located on the surface of porous lamina 3670.

Referring to the testing apparatus, the semiochemical field trap 1000 for blood feeding arthopods, field trap 1000 is located in a three-space with axes perpendicular to one another. The semiochemical field trap 1000 is shown in perspective view in Figure 21 comprising:
(1) an upright vertically disposed housing;
(2) extending outwardly from the housing a plurality of horizontally disposed hollow housings 116a and 116b which have contained therein insect sticky traps;
(3) air 138 and/or carbon dioxide supply means 134, 136 for supplying air and/or carbon dioxide into the vertical hollow housing and then through the plurality of horizontally disposed hollow housings 116a and 116b; and
(4) at least one power supply means for energizing radiation means located on the vertical hollow housing whereby on engagement of the power supply means with the radiation means and operation of the air 138 and/or carbon dioxide supply means 134, 136, arthropods in the vicinity of the trap are attracted by the activated radiation means and the gas emanating from the horizontally disposed hollow housing 116a to a location so close to the trap 1000 that in the event that an attracting semiochemical located in the housings 116a and 116b is detected by at least one of the arthropods, at least one of the arthropods will enter the inner void of the horizontally disposed hollow housings 116a and 116b counter current the gas stream emanating therefrom and remain permanently entrapped therein.

The semiochemical field trap 1000 of Figure 21 is disclosed in detail in U.S. Letters Patent 5,228,233 issued on July 20, 1993.

Figure 1 A is a series of graphs depicted in three-dimensions (in a rectangular mode for the "X" and "Y" axes) showing the relative attractiveness or repellency of air, ISOCYCLOGERANIOL having the structure: 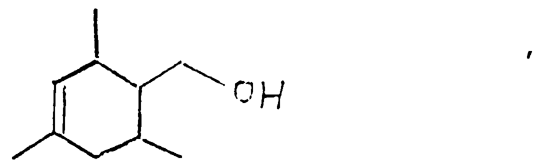 and FLORALOL having the structure: 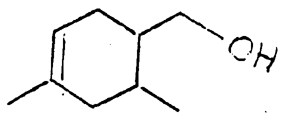 with respect to attractiveness or repellency of the mosquito, Aedes aeagyti. The graph indicated by reference numeral 150a is for air. The graph indicated by reference numeral 145a is for ISOCYCLOGERANIOL. The graph indicated by reference numeral 176a is for FLORALOL. The "X" axis along which the particular materials are measured insofar as their attractiveness or repellency is concerned is indicated by reference numeral 107. The number of insects collected per interval is indicated on the "Y" axis and the "Y" axis is indicated by reference numeral 100. The results are tabulated in Table I(A) as follows:

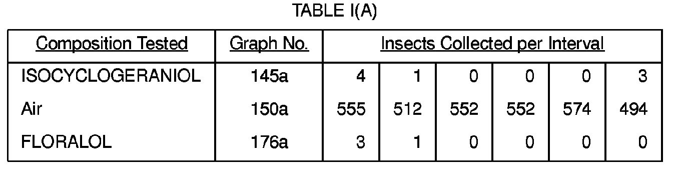

Figure 1 B is a series of graphs depicted in three-dimensions (in a rectangular mode for the "X" and "Y" axes) showing the relative attractiveness or repellency of air, ISOCYCLOGERANIOL and FLORALOL with reference to attractiveness or repellency for Aedes aegypti. The graphs are based on experiments run for a period of six hours with six intervals of one hour each. The graph indicated by reference numeral 145b is for ISOCYCLOGERANIOL. The graph indicated by reference numeral 150b is for air. The graph indicated by reference numeral 176b is for FLORALOL. The results are tabulated in Table I(B) as follows:

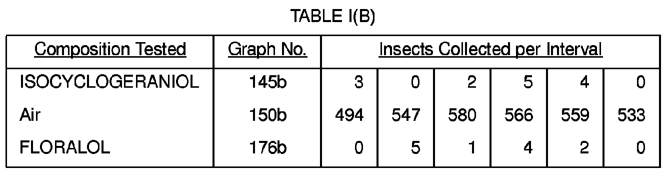

Figure 2A is a series of graphs depicted in three-dimensions (in a rectangular mode for the "X" and "Y" axes) showing the relative attractiveness or repellency of the materials:
(i) air;
(ii) ISOCYCLOGERANIOL having the structure: 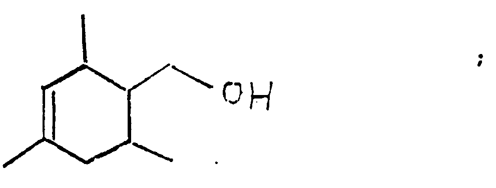
(iii) FLORALATE having the structure: 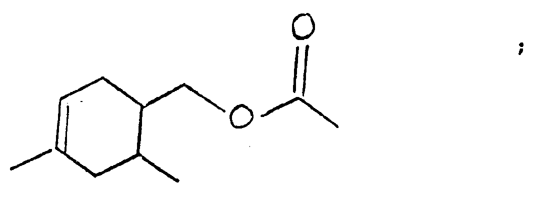 and
(iv) DIHYDROFLORALOL having the structure: 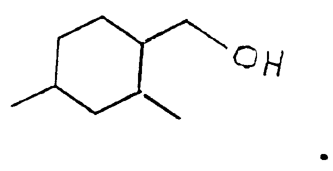 The test data is for the mosquitoes, Aedes aeagypti. The graphs are based on experiments run for a period of one hour with six intervals of ten minutes each. The graph indicated by the reference numeral 200a is for air. The graph indicated by reference numeral 205a is for ISOCYCLOGERANIOL. The graph indicated by reference numeral 203a is for FLORALATE. The graph indicated by reference numeral 202a is for DIHYDROFLORALOL. The results are tabulated in Table I I(A) as follows:

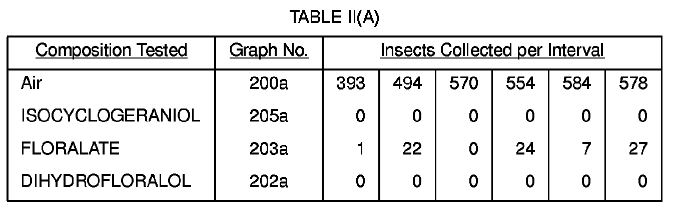

Figure 2B is a series of graphs depicted in three-dimensions (in a rectangular mode for the "X" and "Y" axes) showing the relative attractiveness or repellency of the materials:
(i) air;
(ii) ISOCYCLOGERANIOL having the structure: 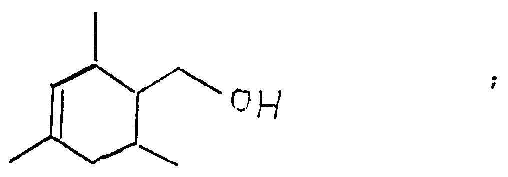
(iii) FLORALATE having the structure: 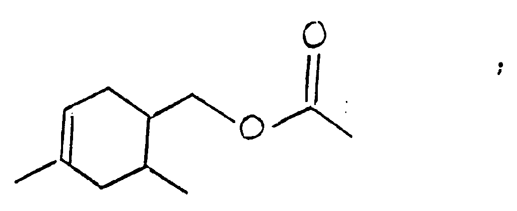 and
(iv) DIHYDROFLORALOL having the structure: 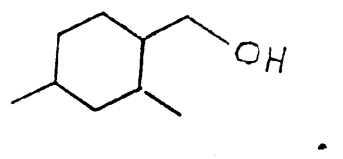 The graphs are based on experiments run for a period of eighteen hours with six intervals of three hours each using as the insect to be tested the mosquito, Aedes aegypti. The graph indicated by reference numeral 200b is for air. The graph indicated by reference numeral 205b is for ISOCYCLOGERANIOL. The graph indicated by reference numeral 203b is for FLORALATE. The graph indicated by reference numeral 202b is for DIHYDROFLORALOL. The results are tabulated in Table II(B) as follows:

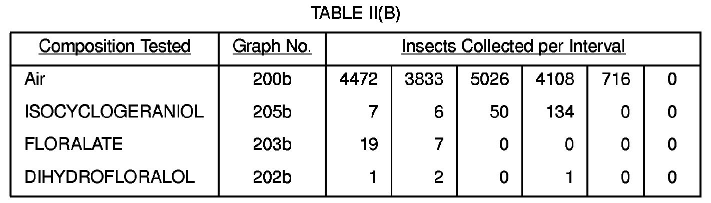

Figure 3 is a series of graphs depicted in three-dimensions (in a rectangular mode for the "X" and "Y" axes) showing the relative attractiveness or repellency of the materials:
(i) air; and
(ii) DIHYDROFLORALOL having the structure: 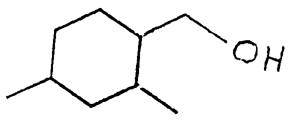 The graphs are based on experiments run for a period of one hour with six intervals of ten minutes each using as the insect to he tested the Horn fly (Haematobia irritans [L.]). The graph indicated by reference numeral 300 is for air. The graph indicated by reference numeral 302 is for DIHYDROFLORALOL. The results are tabulated in Table III as follows:

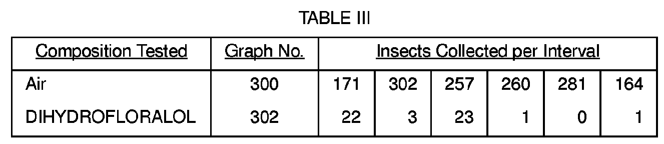

Figure 4 is a series of graphs depicted in three dimensions (in a rectangular mode for the "X" and "Y" axes) showing the relative attractiveness or repellency of the materials:
(i) air;
(ii) ISOCYCLOGERANIOL having the structure: 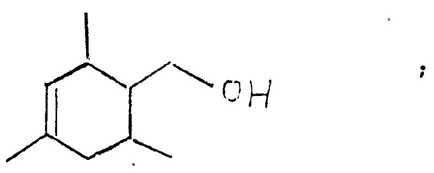
(iii) FLORALATE having the structure: 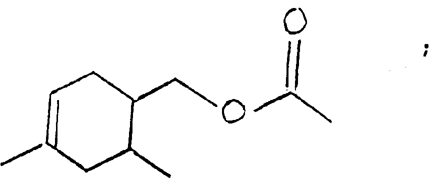 and
(iv) FLORALOL having the structure:

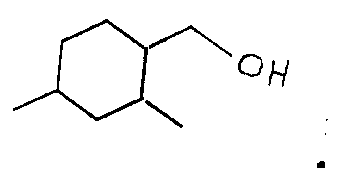

The graphs are based on experiments run for a period of one hour with six intervals of ten minutes each using as the insect to be tested the Horn fly (Haematobia irritans [L.]). The graph indicated by reference numeral 400 is for air. The graph indicated by reference numeral 445 is for ISOCYCLOGERANIOL. The graph indicated by reference numeral 443 is for FLORALATE. The graph indicated by reference numeral 426 is for FLORALOL. The results are tabulated in Table IV as follows:

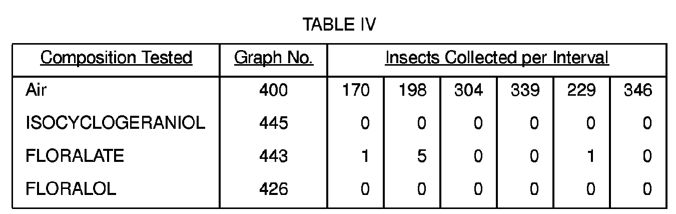

Figure 5 is a series of graphs depicted in three dimensions (in a rectangular mode for the "X" and "Y" axes) showing the relative attractiveness or repellency of the materials:
(i) air;
(ii) CAMEKOL DH having the structure: 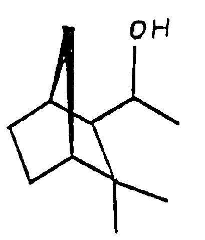
(iii) FLORALOL having the structure: 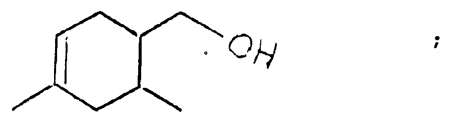 and
(iv) DIHYDROFLORALOL having the structure:

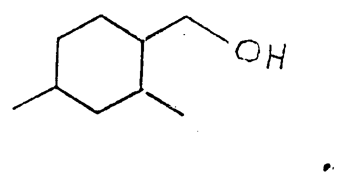

The graphs are based on experiments run for a period of one hour with six intervals of ten minutes each using as the insect to be tested the Horn fly (Haematobia irritans [L.]).

The graph indicated by reference numeral 500 is for air. The graph indicated by reference numeral 536 is for CAMEKOL DH. The graph indicated by reference numeral 526 is for FLORALOL. The graph indicated by reference numeral 542 is for DIHYDROFLORALOL. The results are tabulated in Table V as follows:

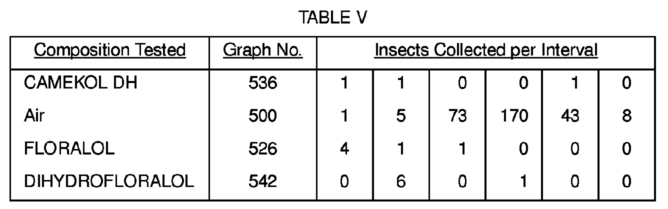

Figure 6 is a series of graphs depicted in three dimensions (in a rectangular mode for the "X" and "Y" axes) showing the relative attractiveness or repellency of the materials:
(i) Air;
(ii) FLORALATE having the structure: 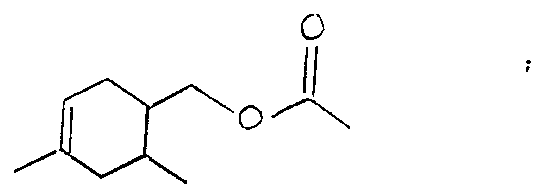 and
(iii) DIHYDROFLORALOL having the structure:

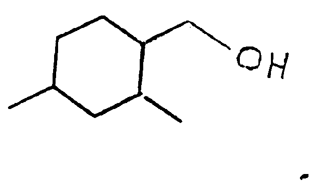

The graphs are based on experiments run for a period of one hour with six intervals of ten minutes each using as the insect to be tested the house fly (Musca domestica L.(Diptera:Muscidae)). The graph indicated by reference numeral 643 is for FLORALATE. The graph indicated by reference numeral 600 is for air. The graph indicated by reference numeral 642 is for DIHYDROFLORALOL. The results are tabulated in Table VI as follows:

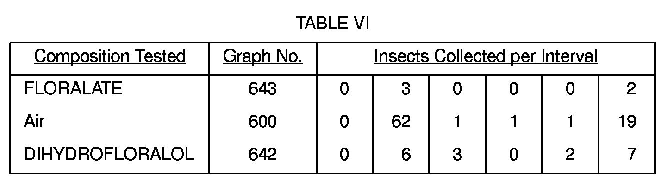

Figure 7 is a series of graphs depicted in three dimensions (in a rectangular mode for the "X" and "Y" axes) showing the relative attractiveness or repellency of the materials:
(i) FLORALOL having the structure: 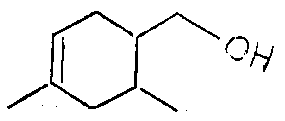 and
(ii) Air.

The graphs are based on experiments run for a period of one hour with six intervals of ten minutes each using as the insect to be tested the housefly, Musca domestica L.(Diptera:Muscidae). The graph indicated by reference numeral 700 is for air. The graph indicated by reference numeral 726 is for FLORALOL. The results are tabulated in Table VII as follows:

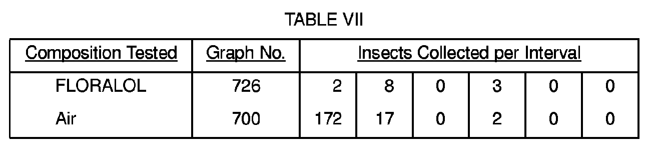

Figure 8A is a graph showing the mean number of mosquitoes collected (on the "Y" axis) versus the treatment substance (on the "X" axis) using the field trap of Figure 21 having six ports and three infra-red light emitting diodes and using the following materials:
(i) a 50:50 mole:mole mixture of air and carbon dioxide with the feed rate of carbon dioxide being 2.7 gram moles per hour;
(ii) CAMEKOL DH having the structure: 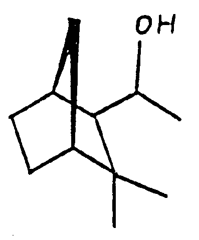 and
(iii) ISOCYCLOGERANIOL having the structure:

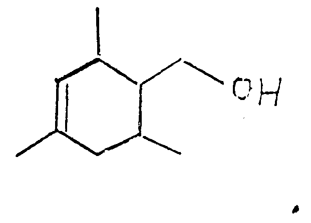

The bar graph showing the mean number of insects collected using the mixture of air and carbon dioxide is indicated by reference numeral 8000a. The bar graph indicating the mean number of mosquitoes collected using CAMEKOL DH is indicated by reference number 8036a. The bar graph using ISOCYCLOGERANIOL is indicated by reference numeral 8045a.

Figure 8B is a series of bar graphs showing the mean number of mosquitoes collected on the "Y" axis versus the treatment substance on the "X" axis using the semiochemical field trap of Figure 21 having six ports with three infra-red light emitting diodes. The substances used are:
(i) a 50:50 mixture of air and carbon dioxide with the carbon dioxide rate being 2.7 gram moles per hour;
(ii) DIHYDROFLORALOL having the structure: 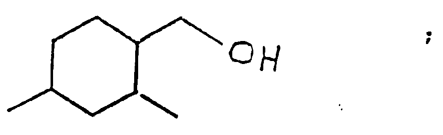
(iii) ISOCYCLOGERANIOL having the structure: 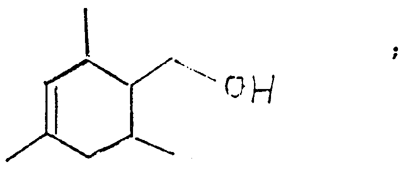
(iv) ISOCYCLOGERANIOL methyl carbonate having the structure: 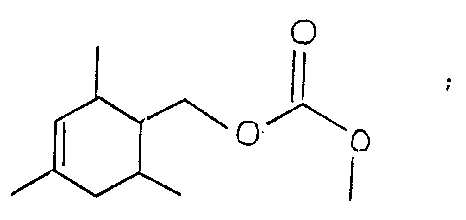 and
(v) ISOCYCLOGERANIOL ethyl carbonate having the structure: 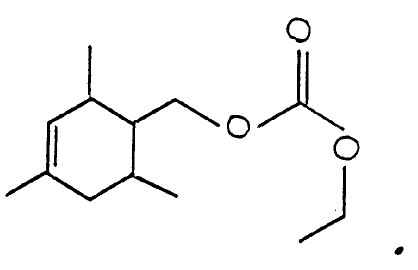 The bar graph showing the mean number of mosquitoes collected using the mixture of air and carbon dioxide is indicated by reference numeral 8000b. The bar graph using the DIHYDROFLORALOL is indicated by reference numeral 8042b. The bar graph showing the results using ISOCYCLOGERANIOL is indicated by reference numeral 8045b. The bar graph showing the results when using the ISOCYCLOGERANIOL methyl carbonate is indicated by reference numeral 8003b. The bar graph showing the results using the ISOCYCLOGERANIOL ethyl carbonate is indicated by reference numeral 8004b.

Figure 8C is a series of bar graphs indicating the mean number of mosquitoes trapped on the "Y" axis versus the treatment substance on the "X" axis using a semiochemical field trap as illustrated in Figure 21 having six ports with three infra-red light emitting diodes using the following substances:
(i) a mixture of air and carbon dioxide in a mole ratio of 50:50 at a rate of carbon dioxide of 2.7 gram moles per hour;
(ii) FLORALOL having the structure: 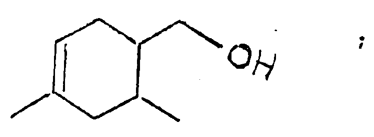 and
(iii) FLORALATE haying the structure:

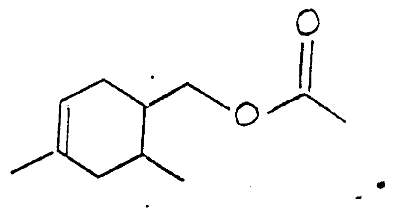

The bar graph showing the results using the mixture of air and carbon dioxide is indicated by reference numeral 8000c. The bar graph showing the results using FLORALOL is indicated by reference numeral 8026c. The bar graph showing the results using FLORALATE is indicated by reference numeral 8043c.

In each of the experiments, the results for which are shown in Figures 8A, 8B and 8C the following insects were shown to be either repelled or attracted:
Culex niaripalpus;
Aedes atlanticus;
Culex salinarius;
Aedes vexans;
Culex spp;
Simulium spp;
Psoroferia ferox;
Aedes infirmatus;
Drosophila melanogaster;
Coccinellidae;
Anopheles crucians;
Psoroferia columbiae;
Culicoides spp.; and
Aedes spp..

In referring to the extruder of Figure 9, polymer 12 and 13 is admixed in vessel 14 and added at barrel segment S-1 of barrel 16 to the extruder which is powered by motor 15 held in place by bracket 23A. Simultaneously into barrel segment S₋6 (one of segments 18a, 18b, 18c or 18d) is added the insect repellent which is one or more of the insect repellent-containing compositions of our invention previously held in container 17. The repellent/perfumant mixture is pumped through pump 23 into barrel segment 18c/S₋6. Simultaneously, foaming agent is added from vessel 19 into barrel segment S₋8 from barrel segment S-10, a foamed tow containing polymer having imbedded therein insect repel- lent/perfume is passed through cooling bath 20 and the cooled tow 22 is then passed into mascerating machine 21 wherein the tow is chopped into particles and held in container 21a. for future use, e.g., for use in conjunction with the manufacture of the insect repellent soap or detergent bars described in detail, infra.

Figures 11 -20, inclusive, show a preferred example of an ellipsoidally shaped detergent tablet 830. The preferred ellipsoidally-shaped detergent tablet 830 contains a solid plastic core 832 which can be fabricated from, for example, polyethylene, polypropylene, nylon, a biodegradable polymer such as poly(epsilon caprolactone) or any polymer capable of having therein microvoids from which an insect repelling/perfuming substance, e.g., at least one of the appropriate insect repellent-containing compositions of our invention will be controllably transported from the plastic core into and through the soap cake over a reasonable period of time during the use of the soap cake. Such polymers can be microporous polymers, such as those described in U.S. Letters Patent No. 4,247,498 issued on January 27, 1981. Surrounding the central plastic core containing insect repellent 832, is detergent 830' which is in the solid phase at ambient conditions, e.g., room temperature and atmospheric pressure. Examples of workable detergents 830' are "elastic" detergents such as those described in U.S. Letters Patent No. 4,181,632 issued on January 1, 1980, or "transparent" soaps such as those set forth in U.S. Letters Patent No. 4,165,293 issued on August 21, 1979. Other examples of the detergent 830' useful in our invention are those set forth as "variegated soaps" in Canadian Letters Patent No. 1,101,165 issued on May 19, 1981.

On use of the soap tablet 830 or detergent bar, the insect repellent agent originally located in plastic core 832 is transported at a steady state from core 832 through core surface 831 through the detergent 830' and finally through the surface of the detergent bar at, for example, 833, 834, 835 and 836.

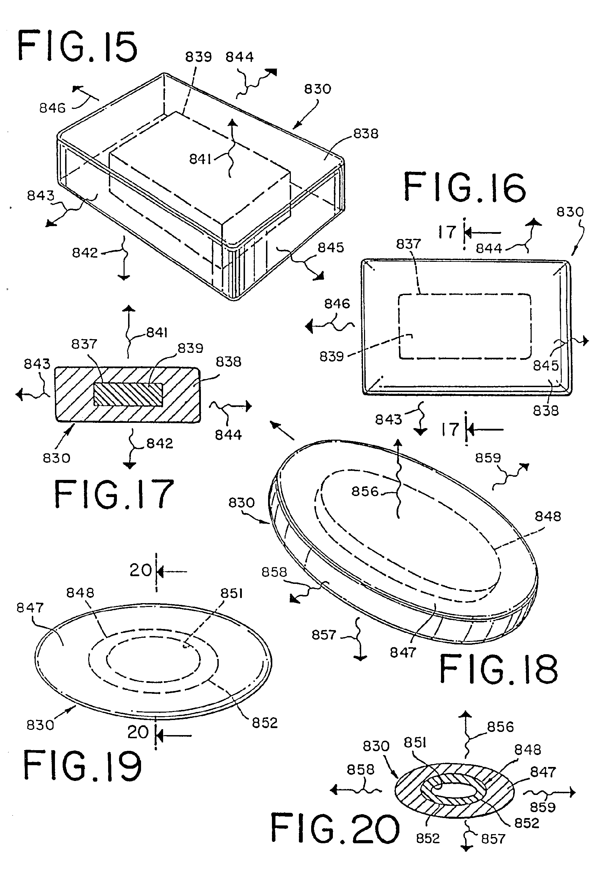

The detergent bar or tablet 830 may be of any geometric shape, for example, a rectangular parallelepiped tablet as is shown in Figures 15, 16 and 17 containing solid plastic core 839. The insect repellent located in solid plastic core 839 on use of the detergent bar passes through at steady state, surface 837 of Figure 16, detergent 838 and finally surface 839 at, for example, locations 840. 841. 842 and 843. The environment surrounding the detergent bar on use thereof is then treated with the insect repellent at 843, 844 and 845, for example. Optionally, aromatizing agent can also be contained in the detergent bar (if desired) and so the environment surrounding the detergent bar on use thereof would also be aesthetically aromatized at 843, 844 and 845, for example, if the appropriate insect repellent-containing composition of our invention is insufficient for such aromatization. In certain instances such appropriate insect repellent-containing compositions are indeed sufficient for such aromatization.

As is shown in Figures 18, 19 and 20 the plastic core of the detergent tablet 830 may have a single finite void at its center 851 (of Figures 19 and 20) in which the insect repellent agent and optionally any additional aromatizing agents are contained. The plastic core is a shell 848 having outer surface 852 (shown in Figures 19 and 20). The insect repellent agent (and optionally any additional aromatizing agent) contained in the void in the plastic core permeates through shell 848, past surfce 852 at a steady state, through the detergent 847 and to the environment at, for example, 856, 857 858 and 859.

In addition to the insect repellent contained in the core, e.g., core 839 or core void the core can also contain other materials for therapeutic use, for example, bacteriastats, deodorizing agents and the like which are compatible with the appropriate insect repellent-containing compositions of our invention. In the alternative, the plastic core of the detergent tablet of Figures 18, 19 and 20 may have an empty single finite void at its center 851 with the insect repellent contained in the shell 848.

At the end of the use of the detergent tablet, the hollow core or the solid core can be used as an insect imparting and aroma imparting or air freshener household article. In addition, depending on the ratio of the volume of the void 851, to the solid part of the detergent tablet of Figures 18, 19 and 20, the detergent tablet of Figures 18, 19 and 20 can be so fabricated that it will float on the surface of the liquid in which it is being used and this physical attribute has certain obvious advantages.

Figures 18, 19 and 20 may have an empty single finite void at its center 851 with the insect repellent contained in the shell 848.

At the end of the use of the detergent tablet, the hollow core or the solid core can be used as an insect imparting and aroma imparting or air freshener household article. In addition, depending on the ratio of the volume of the void 851, to the solid part of the detergent tablet of Figures 18, 19 and 20, the detergent tablet of Figures 18, 19 and 20 can be so fabricated that it will float on the surface of the liquid in which it is being used and this physical attribute has certain obvious advantages.

Figure 22 is a series of bar graphs showing the feeding contact for a mean feeding contact for a mean one hour feeding contact period of time using the olfactometer apparatus of Figure 10. The number of feeding contacts are set forth on the "Y" axis and the treatment substance is set forth on the "X" axis. The bar graph indicated by reference numeral 2200 is for air and shows the results using said air. The bar graph indicated by reference numeral 2243 shows the results using FLORALATE having the structure:

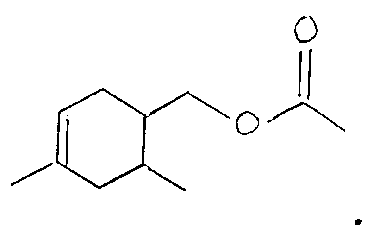

The bar graph indicated by reference numeral 2244 shows the results using geraldehyde having the structure:

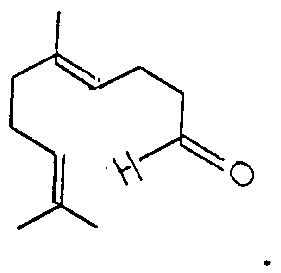

Figure 23 is a series of bar graphs showing on the "Y" axis the mean 2-6 hour number of feeding contacts for mosquitoes Aedes aegypti using the olfactometer of Figure 10 versus the treatment substance on the "X" axis. The graph indicated by reference numeral 2300 is the graph showing the results using air. The graph indicated by reference numeral 2343 is the bar graph showing the results using FLORALATE having the structure: 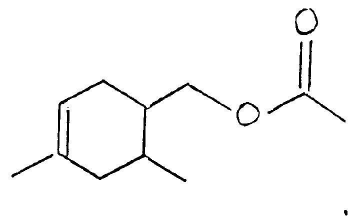 The graph indicated by reference numeral 2344 is the bar graph showing the results of this experiment using geraldehyde having the structure:

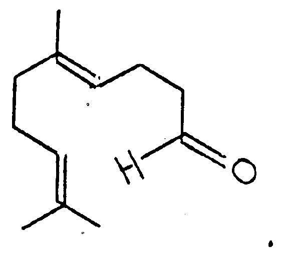

The apparatus of Figure 10 is disclosed in detail in U.S. Letters Patent 5,134,892.

Figure 24A is a series of graphs depicted in three dimensions (in a rectangular mode for the "x" and "y" axes) showing the relative attractiveness or repellency of the following compositions of matter:
(i) air; and
(ii) the compound having the structure:

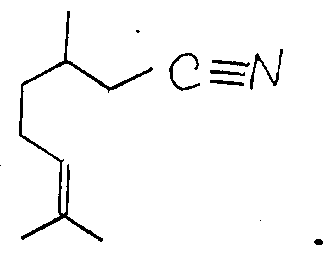

The graph indicated by reference numeral 32a is for air. The graph indicated by reference numeral 30a is for the compound having the structure: 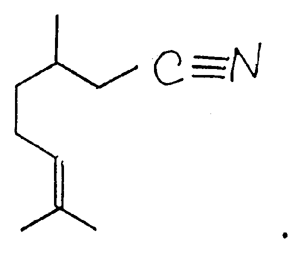 The graphs show the attractancy or repellency for mosquitoes (Aedes aegypti) using the apparatus of Figure 10. The graphs are based on experiments run for a total of 1 hour with six intervals of 10 minutes each. The results are tabulated in Table VIII(A) as follows:

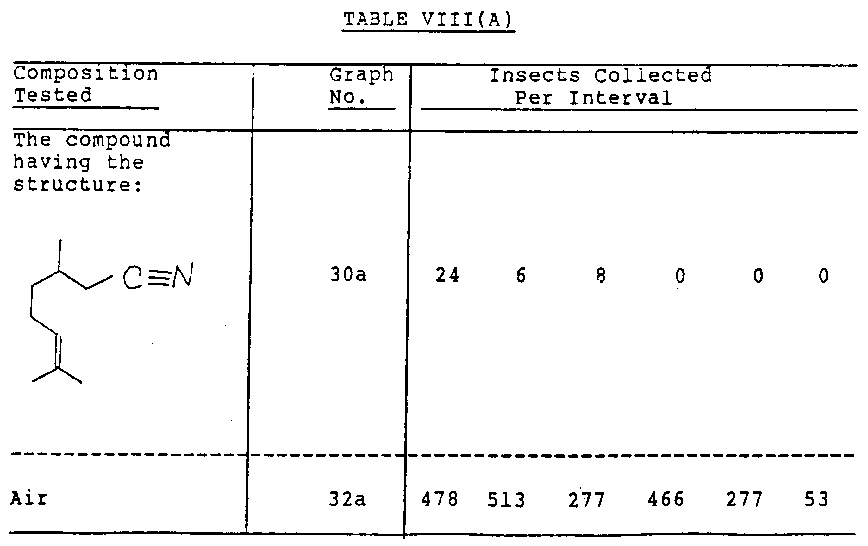

Figure 24B is a series of graphs depicted in three dimensions (in a rectangular mode for the "x" and "y" axes) showing the relative attractiveness or repellency of the following compositions of matter:
(i) air; and
(ii) the compound having the structure:

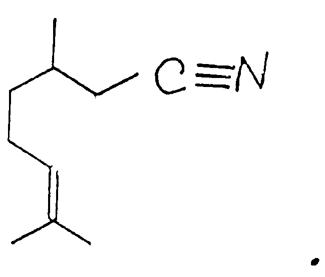

The graph indicated by reference numeral 30b is for the compound having the structure: 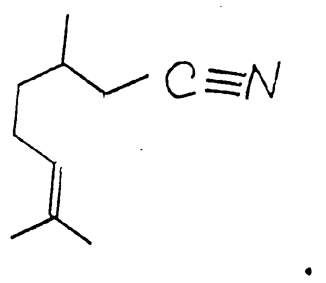 The graph indicated by reference numeral 32b is for air. The graphs show the attractancy or repellency for mosquitoes (Aedes aegyptae) using the apparatus of Figure 10. The graphs are based on experiments run for a total of 6 hours with 6 intervals of 1 hour each. The results are tabulated in Table VIII(B) below:

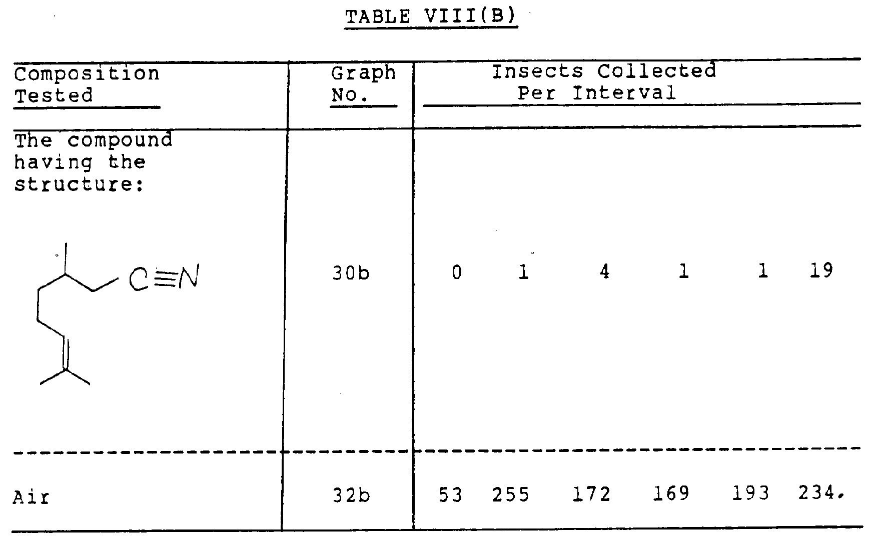

Figure 25A is a series of graphs depicted in three dimensions (in a rectangular mode for the "x" and "y" axes) showing the relative attractiveness or repellency of several compositions of matter. The graph indicated by reference numeral 40a is for the compound having the structure: 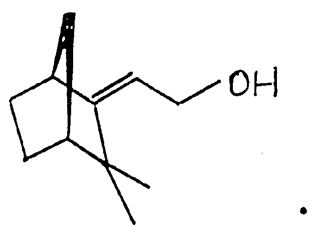 The graph indicated by reference numeral 42a is for air. The graph indicated by reference numeral 44a is for a mixture containing 81 mole percent geraniol having the structure: 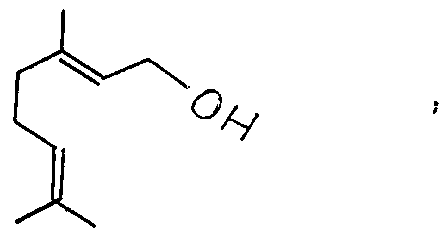 14 mole percent nerol having the structure: 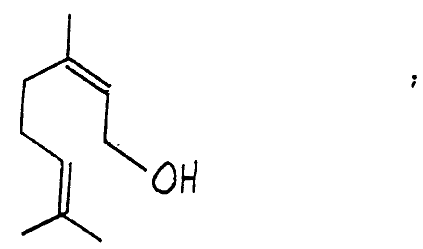 and 5 mole percent citronellol having the structure: 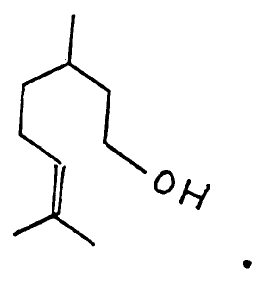 The graphs show the attractancy or repellency for mosquitoes (Aedes aegyptae) using the apparatus of Figure 10. The graphs are based on experiments run for a total of 1 hour with six intervals of 10 minutes each. The results are tabulated in Table IX(A) as follows:

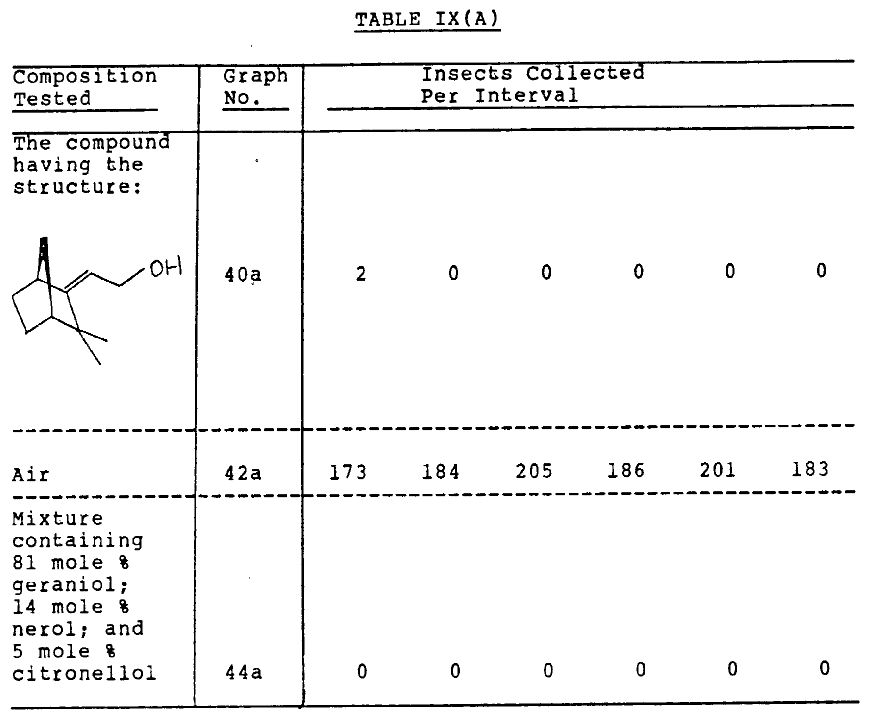

Figure 4B is a series of graphs depicted in three dimensions (in a rectangular mode for the "x" and "y" axes) showing the relative attractiveness or repellency of several compositions of matter. The graph indicated by reference numeral 40b is for the compound having the structure: 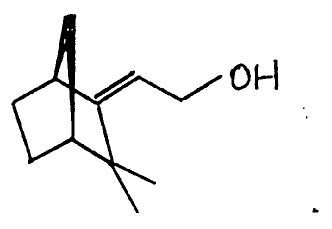 The graph indicated by reference numeral 42b is for air. The graph indicated by reference numeral 44b is for a mixture containing 81 mole percent geraniol, 14 mole percent nerol and 5 mole percent citronellol. The graphs show the attractancy or repellency for mosquitoes (Aedes aegyptae) using the apparatus of Figure 10. The graphs are based on experiments run for a total of 6 hours with six intervals of 1 hour each. The results are tabulated in Table IX(B) as follows:

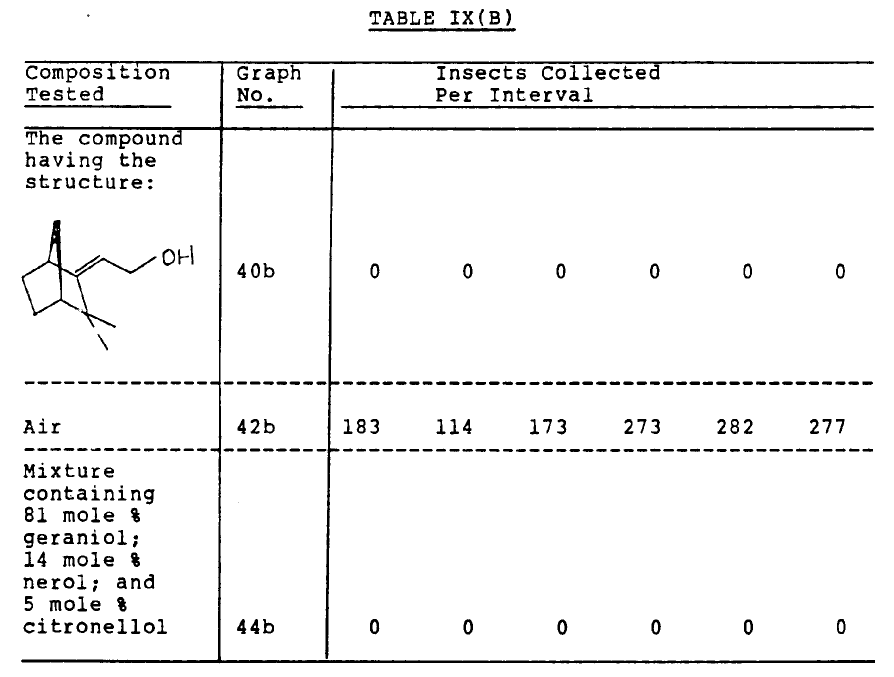

The following examples illustrate the use of our insect repellents having the structures: 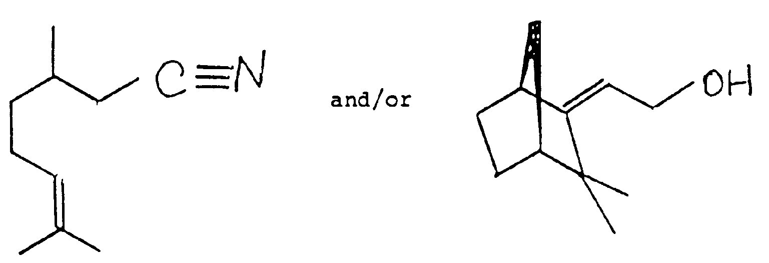 in candles.

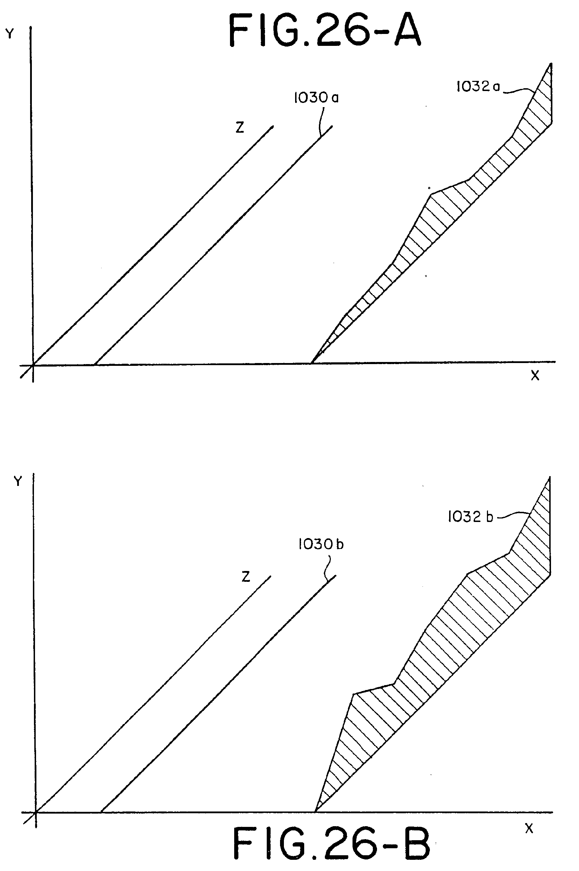

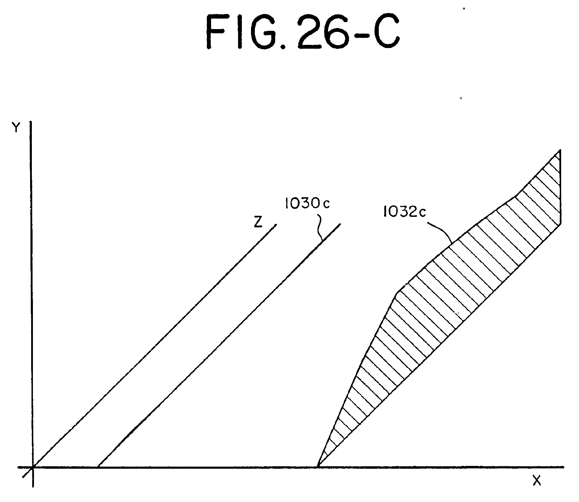

Figure 26A is a series of graphs depicted in three dimensions (in a rectangular mode for the "x" and "y" axes) showing the relative attractiveness or repellency of several compositions of matter. The graph indicated by reference numeral 1030a is for methyl anthranilate having the structure: 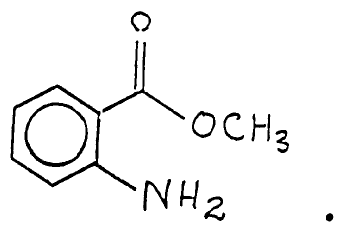 The graph indicated by reference numeral 1032a is for air. The graphs show the attractancy or repellency for the mosquito species Aedes aegyptae using the apparatus of Figure 10. The graphs are based on experiments run for a total of one hour with six intervals of ten minutes each. The results are tabulated in Table X(A) as follows:

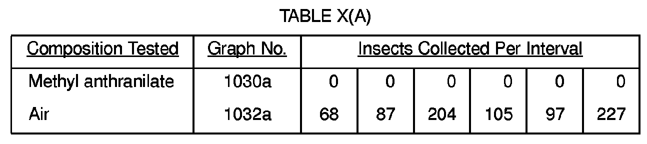

Figure 26B is a series of graphs depicted in three dimensions (in a rectangular mode for the "x" and "y" axes) showing the relative attractiveness or repellency of several compositions of matter. The graph indicated by reference numeral 1030b is for methyl anthranilate. The graph indicated by reference numeral 1032b is for air. The graphs show the attractancy or repellency for the mosquito species Aedes aeqyptae using the apparatus of Figure 10. The graphs are based on experiments run for a total of six hours with six intervals of one hour each. The results are tabulated in Table X(B) below as follows:

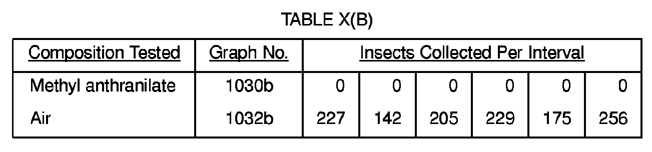

Figure 26C is a series of graphs depicted in three dimensions (in a rectangular mode for the "x" and "y" axes) showing the relative attractiveness or repellency of several compositions of matter. The graph indicated by reference numeral 1030c is for methyl anthranilate. The graph indicated by reference numeral 1032c is for air. The graphs show the attractancy or repellancy for the mosquito species Aedes aeavptae using the apparatus of Figure 10. The graphs are based on experiments run for a total of twelve hours with six intervals of two hours each. The results are tabulated in Table X(C) as follows:

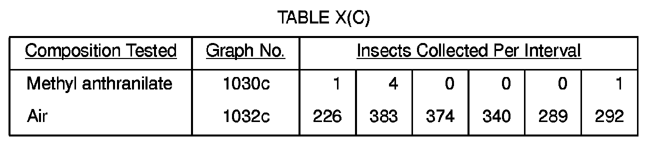

Figure 27A is a series of graphs depicted in three dimensions (in a rectangular mode for the "x" and "y" axes) showing the relative attractiveness or repellency of several compositions of matter. The graph indicated by reference numeral 1040a is for LAVONAX™ having the structure: 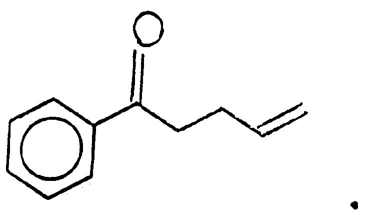 The graph indicated by reference numeral 1041 a is for MELOZONE™, defined according to the structure: 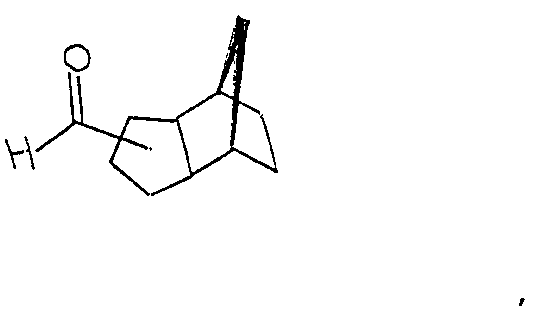 a 50:50 mixture of the compound having the structure: 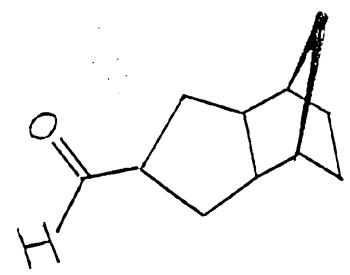 and the compound having the structure: 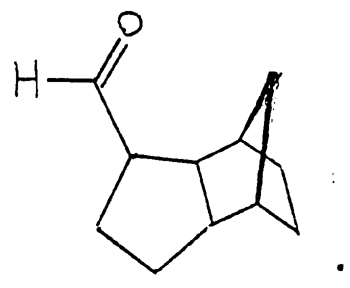 The graph indicated by reference numeral 1042a is for air. The graph indicated by reference numeral 1043a is for a mixture containing 81 mole percent geraniol having the structure: 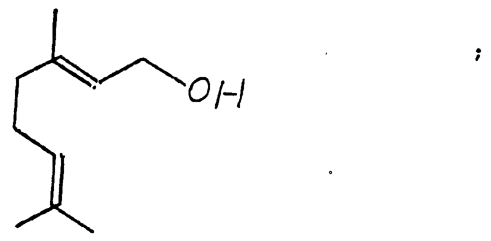 14 mole percent citronellol having the structure: 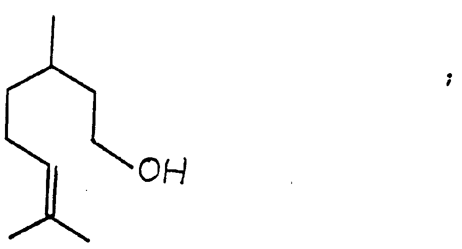 and 5 mole percent nerol having the structure: 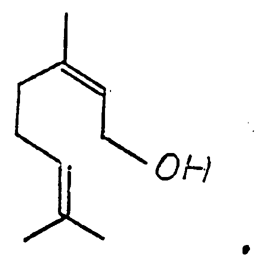 The graphs shows the attractancy or repellency for the mosquito species Aedes aeav^{p}tae using the apparatus of Figure 10. The graphs are based on experiments run for a total of one hour with six intervals of ten minutes each. The results are tabulated in Table XI(A) as follows:

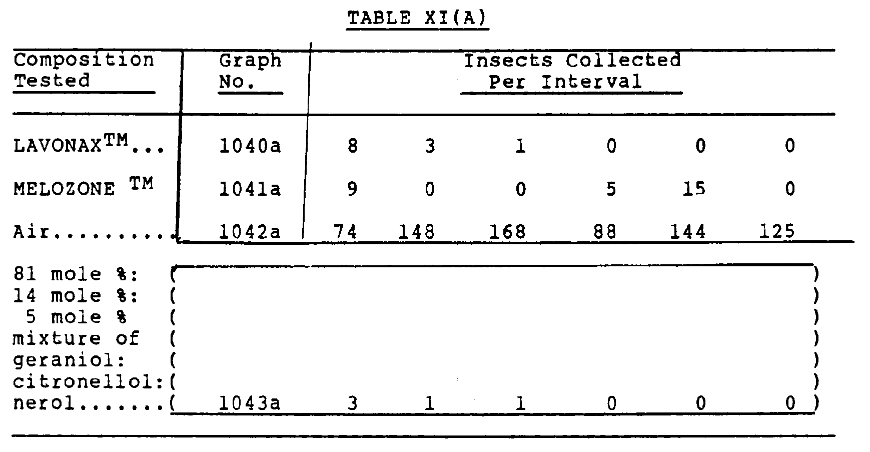

Figure 27B is a series of graphs depicted in three dimensions (in a rectangular mode for the "x" and "y" axes) showing the relative attractiveness or repellency of several compositions of matter. The graph indicated by reference numeral 1040b is for LAVONAX™. The graph indicated by reference numeral 1041b is for MELOZONE™. The graph indicated by reference numeral 1042b is for air. The graph indicated by reference numeral 1043b is for the 81 mole percent:14 mole percent:5 mole percent mixture of geraniol:citronellol:nerol. The graphs shows the attractancy or repellency for mosquitoes Aedes aegyptae using the apparatus of Figure 10. The graphs are based on experiments run for a total of six hours with six intervals of one hour each. The results are tabulated in Table XI(B) below:

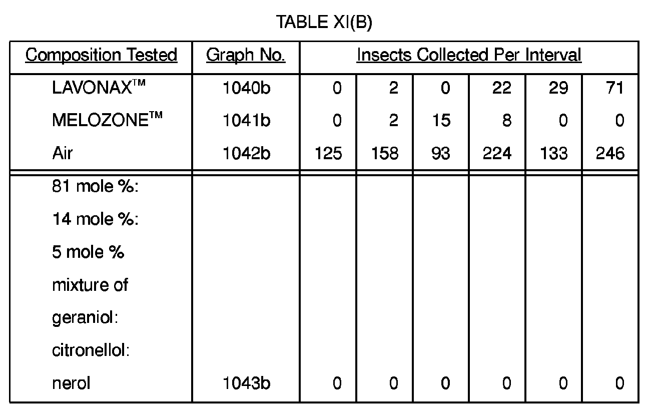

Figure 28A is a series of graphs depicted in three dimensions (in a rectangular mode for the "x" and "y" axes) showing the relative attractiveness or repellency of several compositions of matter. The graph indicated by reference numeral 1050a is for CYCLEMONE A™, a mixture of 51 mole percent of the compound having the structure: 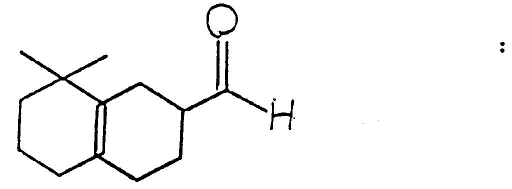 17 mole percent of the compound having the structure: 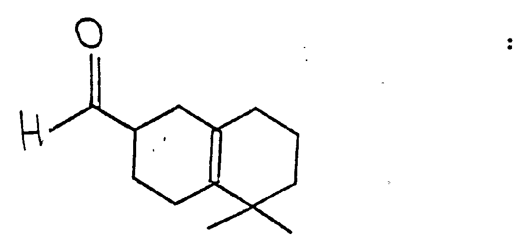 and 32 mole percent of the compound having the structure: 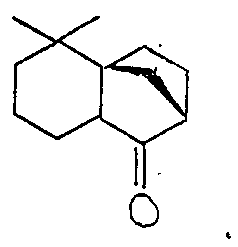 The graph indicated by reference numeral 1052a is for air. The graph indicated by reference numeral 1053a is for a mixture containing 81.8 mole percent geraniol having the structure: 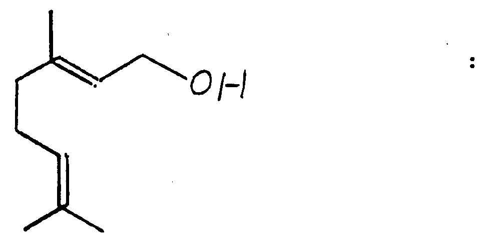 11.66 mole percent citronellol having the structure: 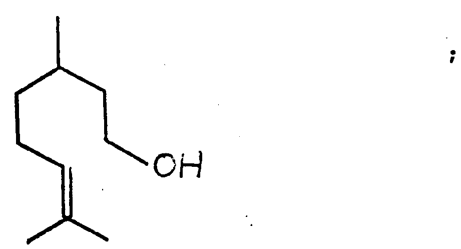 and 6.53 mole percent nerol having the structure: 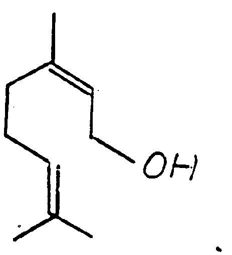 The graphs show the attractancy or repellency for the mosquito species Aedes aegyptae using the apparatus of Figure 10. The graphs are based on experiments run for a total of one hour with six intervals of ten minutes each. The results are tabulated in Table XII(A) as follows:

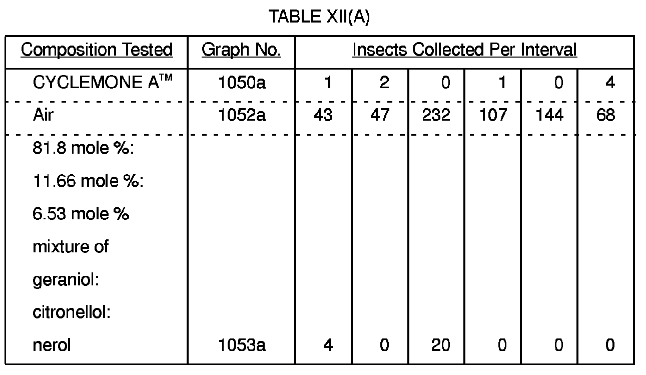

Figure 28B is a series of graphs depicted in three dimensions (in a rectangular mode for the "x" and "y" axes) showing the relative attractiveness or repellency of several compositions of matter. The graph indicated by reference numeral 1050b is for CYCLEMONE A™. The graph indicated by reference numeral 1052b is for air. The graph indicated by reference numeral 1053b is for an 81.8 mole percent: 11.66 mole percent:6.53 mole percent mixture of geraniol:citronellol:nerol. The graphs show the attractancy or repellency for the mosquito species Aedes aeav^{p}tae using the apparatus of Figure 10.

The graphs are based on experiments run for a total of six hours with six intervals of one hour each. The results are tabulated in Table XII(B) as follows:

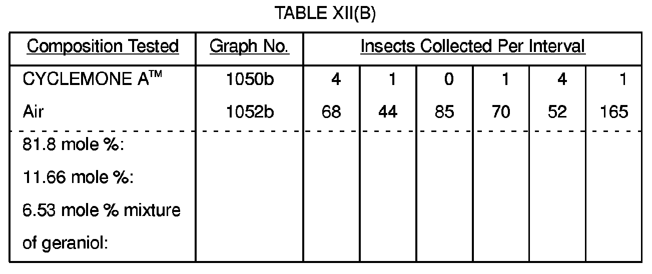

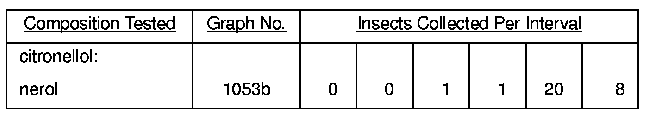

### EXAMPLE I

A transparent candle base mixture is produced by intimately admixing the following ingredients:

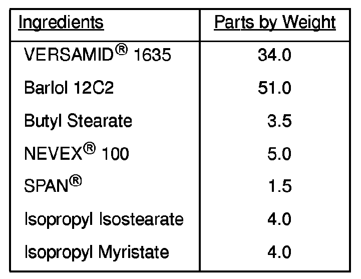

The foregoing mixture is placed in an autoclave and intimately admixed with 22% by weight of the entire mixture of a perfuming-insect repellent composition containing the following ingredients:

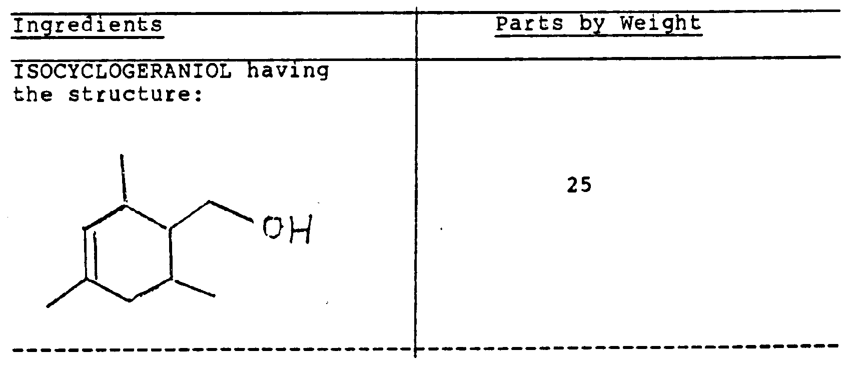

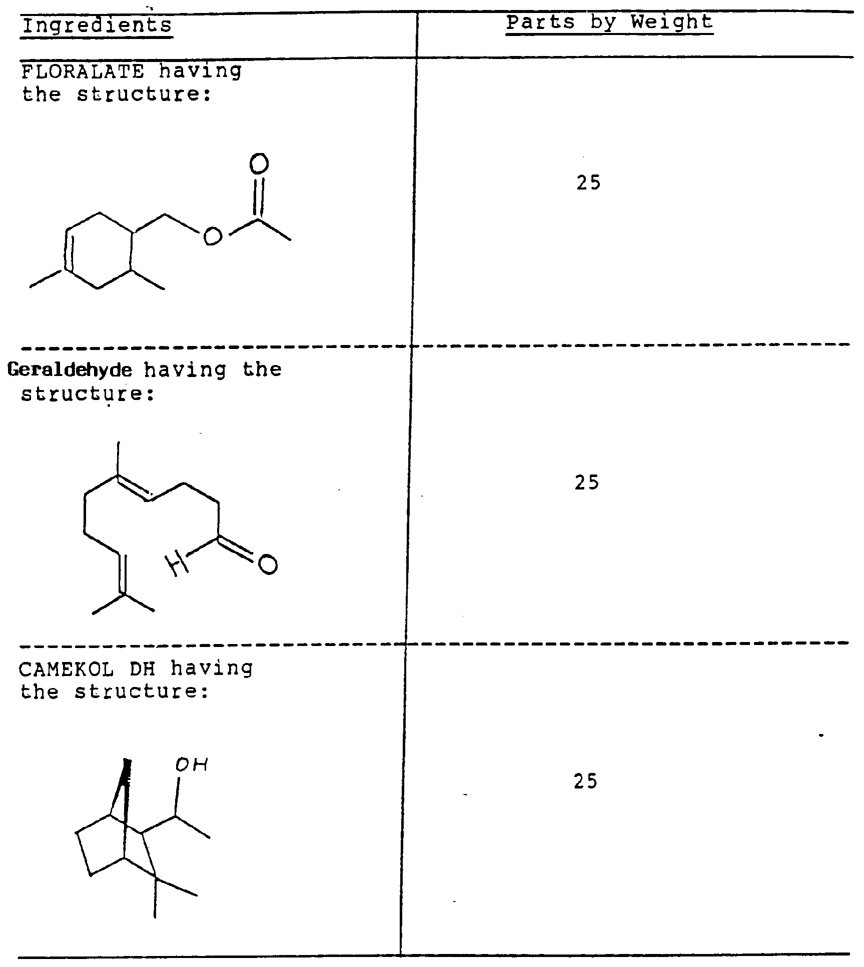

The autoclave is sealed and heated to 180°C under 25 atmospheres pressure and maintained with vigorous shaking for a period of five hours. At the end of the five hour period, the autoclave is depressurized (being under a nitrogen pressure atmosphere) and the autoclave is opened and the contents are then poured into cylindrical candle molds 4" in height and 2" in diameter containing 0.125" wicks. The resulting candles have efficacious Aedes aegypti, Aedes albopictus , and Musca domestica L. repellencies and have aesthetically pleasing aromas on use.

The candles are effective in preventing house flies and the mosquito species Aedes aegypti and Aedes albopictus from entering a room in which four candles have been burning for 15 minutes, the said room having dimensions of 6' x 15' x 15' and having a 2' x 2' open portal adjacent to a house fly and mosquito-infested region in the month of August, 1992 in the temperate zone of Highlands, New Jersey adjacent Raritan Bay

### EXAMPLE II

A study was conducted to evaluate the efficacy of candles which are designated as "A", "B" and "C" in repelling house flies (Musca domestica L.(Diptera:Muscidae) and the mosquito species Aedes aegypti and Aedes albopictus.

Candle "A" contained 95% Paraffin Wax and 5% of ISOCYCLOGERANIOL ethyl carbonate having the structure:

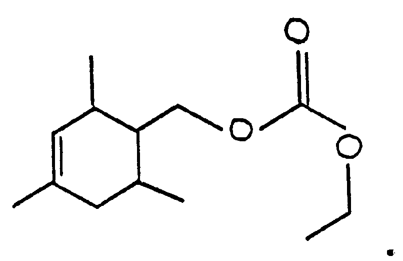

Candle "B" contained 90% Paraffin Wax and 10% citronella oil.

Candle "C" contained only Paraffin Wax.

The candles are allowed to burn for 20 minutes and the number of house flies (Musca domestica L.(Diptera:Muscidae)) and mosquitoes (Aedes aeavati and Aedes albopictus) repelled is recorded for the next 60 minutes with the following equipment and procedure:

### Materials

### Test Chamber

The evaluation was conducted in a 28.3 cubic meter chamber with airing ports. A screened cage measuring 15 cm x 15 cm x 47.5 cm was attached inside an upper airing port, and a screened repellency observation cage measuring 15 cm x 15 cm x 32.5 cm was attached outside the upper airing port. The two cages were held together by a Masonite plate which fit firmly in the airing port. A 4-cm hole located in the center of each Masonite plate provided an escape for the test insects. A barrier was used to close the hole.

### Attractant

A caged grey mouse was used as an attractant and was placed inside the chamber in the larger section of the repellency cage.

### Test Insects

(i) Adult House Flies (Musca domestica L.(Diptera:Muscidae));
(ii) Aedes aegypti mosquitoes;
(iii) Aedes albopictus mosquitoes are Test Insects.

### Procedure

For each replicate, 75 to 100 adult house flies, 75 to 100 Aedes aegypti mosquitoes and 75 to 100 Aedes albopictus mosquitoes were removed from the rearing cage by means of a vacuum aspirator, and transferred by carbon dioxide anesthesia to the inner cage containing the grey mouse. The assembled cage was placed in one of the upper ventilation ports of the chamber. For each experimental situation the test insects were transferred to a clean cage containing the mouse. A candle containing the insect repellent substance to be tested was placed centrally on the chamber floor and burned for 20 minutes before initiating the repellency counts. The maximum period for the repellency counts was 60 minutes. The first repellency count was made at 10 minutes after the burning ended, and subsequent counts were taken at 5-minute intervals thereafter. The number of house flies, Aedes aegypti mosquitoes and Aedes albopictus mosquitoes repelled were those escaping to the outside cage. For the control, counts were made in a similar manner, but no candle was burned.

The same three candles were used for all four replicates. Between replicates the chamber was exhausted, the Kraft paper flooring for the chamber was replaced, and the two screened repellency cages were submerged in hot detergent water, rinsed and dried.

### Results

The overall average percent of house flies, Aedes aegypti and Aedes albopictus mosquitoes repelled for each candle for 60 minutes was as follows:
Candle "A" - 98%
Candle "B" - 52%
Candle "C" - 12%.

The repellency against the three species:
Musca domestica L.(Diptera:Muscidae);
Aedes aegypti; and
Aedes albopictus

were equivalent in this test.

### EXAMPLE III

### PARAFFIN WAX CANDLE BODY

The following composition is prepared:

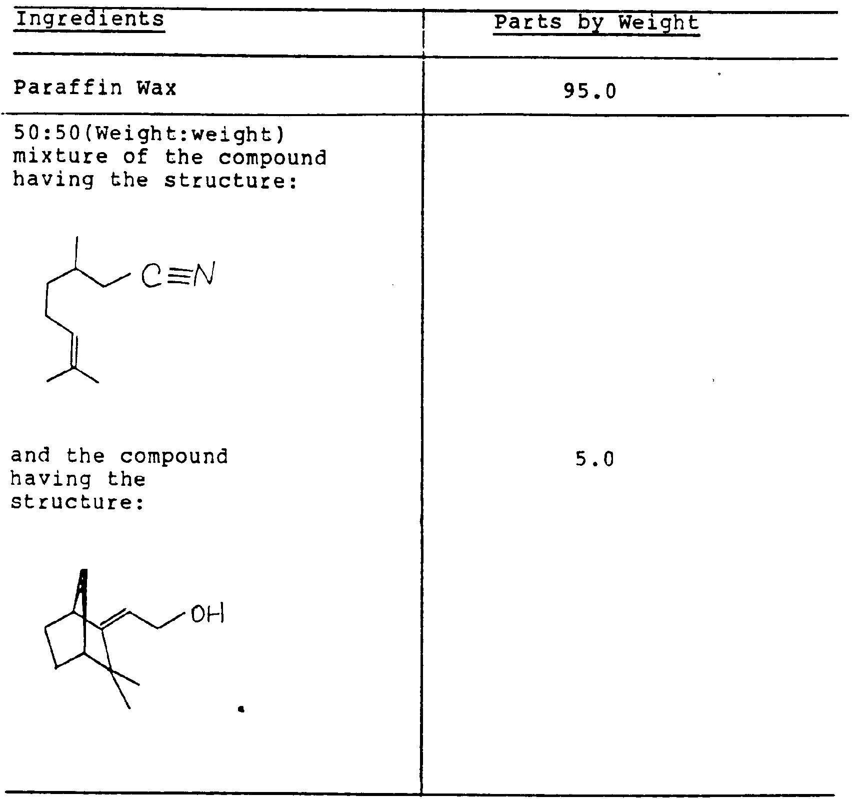

Paraffin wax is intimately admixed at 150°C and 10 atmospheres pressure with the mixture of the compound having the structure: 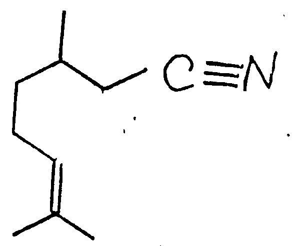 and the compound having the structure: 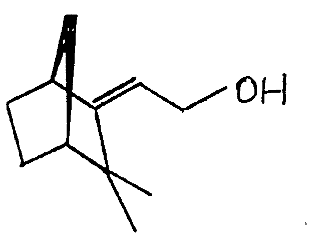 in an autoclave with intensive shaking. The autoclave pressure is maintained with a nitrogen atmosphere. At the end of the period of 1 hour the autoclave is depressurized, the autoclave is opened and the resulting mixture is poured into cylindrical candle molds containing wicks.

The resulting candles on use evolve an aesthetically pleasing aroma and, in addition, give rise to efficacious mosquito repellency (repellency against Aedes aegyptae). The candles are effective in preventing mosquitoes from entering a room in which one candle is burning for a period of 10 minutes, the said room having the dimensions of 6' x 15' x 15' having a 3' x 3' open portal adjacent to a mosquito infested region (Aedes aeqyptae infested region) in the month of August in the temperate zone (location: Highlands, New Jersey next to Raritan Bay).

### EXAMPLE IV

A transparent candle base mixture is produced by intimately admixing the following ingredients:

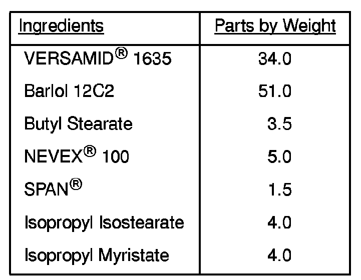

The foregoing mixture is placed in an autoclave and intimately admixed with a perfuming-insect repellent composition containing 5 parts by weight of the compound having the structure: 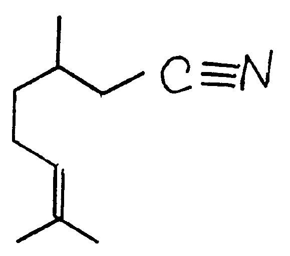 and 1 part by weight of the compound having the structure: 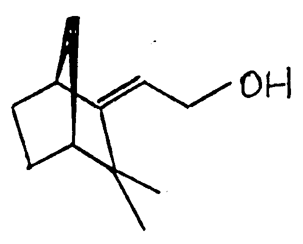 based on the total candle base composition.

The autoclave is sealed and heated to 180°C under 15 atmospheres pressure and maintained with vigorous shaking for a period of 5 hours. At the end of the 5 hour period, the autoclave is depressurized (being a nitrogen pressure atmosphere) and the autoclave is opened and the contents are then poured into cylindrical candle molds 4" in height and 2" in diameter containing 0.125" wicks. The resulting candles have efficacious Aedes aeqyptae repellencies and have aesthetically pleasing aromas on use.

The candles are effective in preventing Aedes aeqyptae from entering a room in which two candles have been burning for 15 minutes, the said room having dimensions of 6' x 15' x 15' and having a 3' x 3' open portal adjacent a Aedes aegyptae-infested region in the month of August, in the temperate zone of Highlands, New Jersey adjacent Raritan Bay.

### EXAMPLE V

The following candle base composition of matter is prepared:

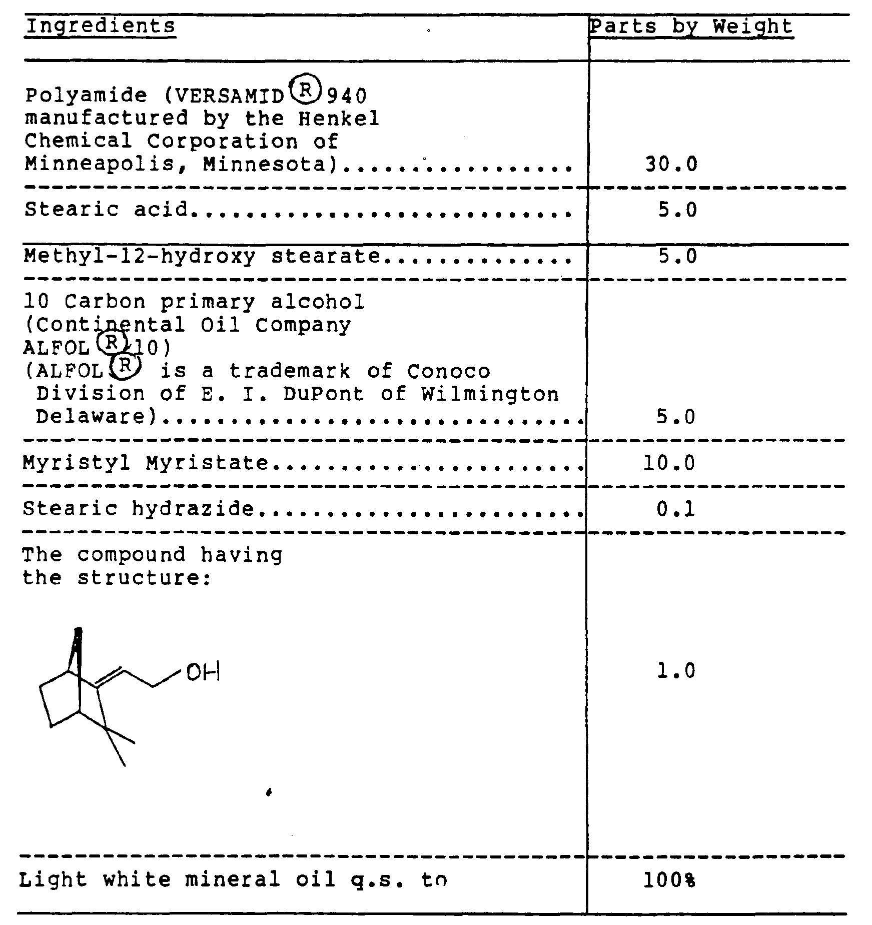

All of the materials except the polyamide are mixed at room temperature. The mixture is then heated gradually with gradual addition of the polyamide and with agitation beginning with the commencement of addition of the polyamide. In the proportion required, the polyamide does not become fully soluble until the mixture reaches the temperature of about 220°F. The temperature on the order of 220°F to 230°F is maintained at atmospheric pressure with continued agitation until the polyamide is fully dissolved. Since higher temperatures promote solution of the polyamide this temperature range can be slightly exceeded with some advantages.

As soon as the polyamide has dissolved completely, the mixture is poured into molds following the conventional practice in the manufacture of molded candles. As the candles cool they harden. The candles are then freed from the molds and tested for Aedes aeavptae repellency.

The candles are effective in preventing Aedes aegyptae from entering a room in which two candles have been burning for 15 minutes, and said room having dimensions of 6' x 15' x 15' and having a 3' x 3' open portal adjacent to an Aedes aegyptae-infested swamp region in the month of August in the temperate zone of Highlands, New Jersey adjacent Raritan Bay

### EXAMPLE VI

### PARAFFIN WAX CANDLE BODY

The following composition is prepared:

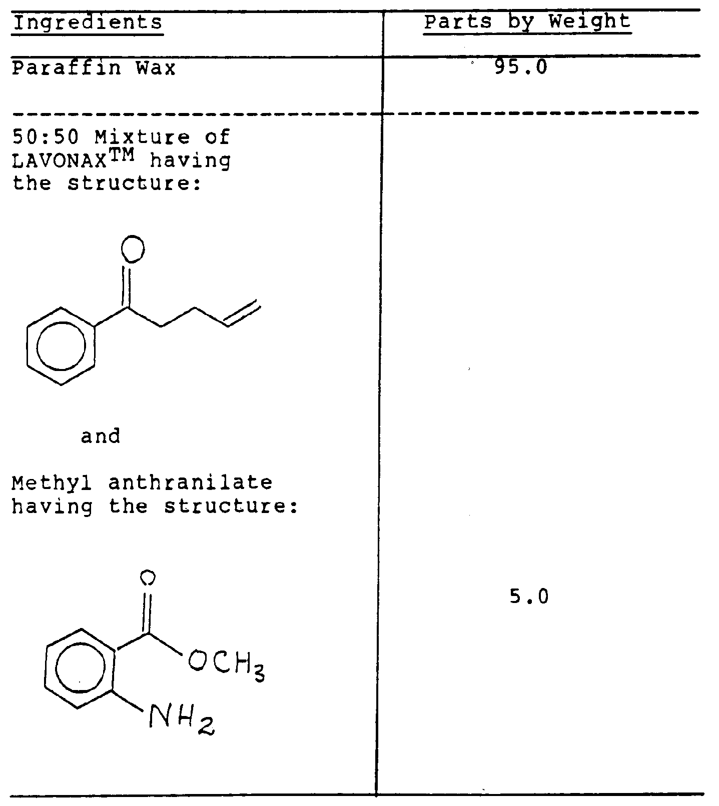

Paraffin wax is intimately admixed at 150°C and 10 atmospheres pressure with the mixture of LAVONAX™ and Methyl anthranilate in an autoclave with intensive shaking. The autoclave pressure is maintained with a nitrogen atmosphere. At the end of the period of 1 hour the autoclave is depressurized, the autoclave is opened and the resulting mixture is poured into cylindrical candle molds containing wicks.

The resulting candles on use evolve an aesthetically pleasing aroma and, in addition, give rise to efficacious mosquito repellency (Aedes aegyptae). The candles are effective in preventing mosquitoes from entering a room in which one candle is burning for a period of 10 minutes, the said room having the dimensions 6' x 15' x 15' having a 3' x 3' open portal adjacent to a mosquito (Aedes aegyaptae)-infested region in the month of August in the temperate zone (location: Highlands, New Jersey next to Raritan Bay).

### EXAMPLE VII

A transparent candle base mixture is produced by intimately admixing the following ingredients:

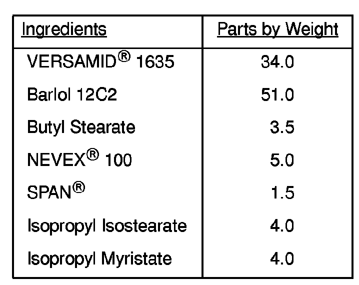

The foregoing mixture is placed in an autoclave and intimately admixed with a perfuming-insect repelling composition containing 3 parts by weight of a mixture containing 60% of the compound having the structure: 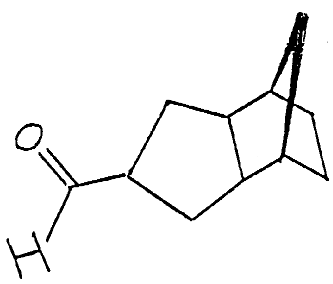 and 40% of the compound having the structure: 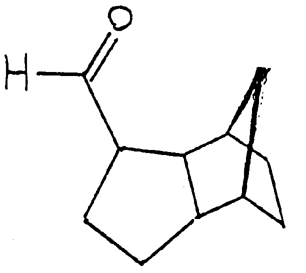 (MELOZONE™) and 4 parts by weight of CYCLEMONE A™, a mixture containing 51 mole percent of the compound having the structure: 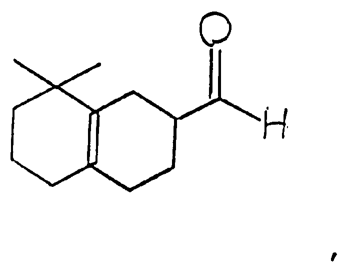 17 mole percent of the compound having the structure: 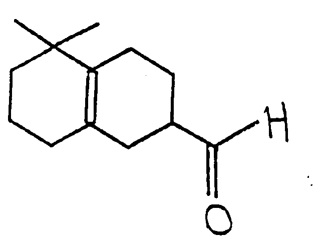 and 32 mole percent of the compound having the structure: 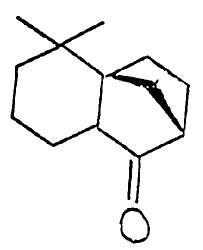 at the rate of 8% by weight of the total candle base composition.

The autoclave is sealed and heated to 180°C under 15 atmospheres pressure and maintained with vigorous shaking for a period of 5 hours. At the end of the 5 hour period, the autoclave is depressurized (being under a nitrogen pressure atmosphere) and the autoclave is opened and the contents are then poured into cylindrical candle molds four inches in height and two inches in diameter containing 0.125" wicks. The resulting candles have efficacious mosquito (Aedes aegyptae) repellencies and have aesthetically pleasing aromas on use.

The candles are effective in preventing mosquitoes (Aedes aeavptae) from entering a room in which two candles have been burning for 15 minutes, the said room having dimensions of 6' x 15' x 15' and having a 3' x 3' open portal adjacent a mosquito (Aedes aegypta)-infested region in the month of August, in the temperate zone of Highlands, New Jersey adjacent Raritan Bay.

The features disclosed in the foregoing description, in the following claims and/or in the accompanying drawings may, both separately and in any combination thereof, be material for realising the invention in diverse forms thereof.

## Claims

1. A method of repelling Musca domestica L.(Diptera:Muscidae), Aedes aegypti, Culex niari^{p}alpus, Aedes atlanticus, Culex salinarius, Aedes vexans, Culex spp., Simulium spp., Psoroferia ferox, Aedes infirmatus, Drosophila melanogaster. Coccinellidae, Anopheles crucians, Psoroferia columbiae, Culicoides spp., Aedes spp. and/or Haematobia irritans [L.], and/or Aedes albopictus for a finite period of time from a three-dimensional space inhabitable by said Musca domestica L.(Diptera: Muscidae), Aedes aegypti, Aedes albopictus. Culex nigripalpus, Aedes atlanticus, Culex salinarius, Aedes vexans, Culex spp.. Simulium spp., Psoroferia ferox, Aedes infirmatus, Drosophila melanogaster. Coccinellidae, Anopheles crucians, Psoroferia columbiae, Culicoides spp., Aedes spp. and/or Haematobia irritans [L.], consisting essentially of the step of exposing said three-dimensional space to an effective Musca domestica L. (Diptera:Muscidae), Aedes aegypti, Aedes albopictus, Culex nigripalpus Aedes atlanticus, Culex salinarius, Aedes vexans, Culex spp., Simulium spp., Psoroferia ferox, Aedes infirmatus, Drosophila melanoaaster. Coccinellidae, Ano^{p}heles crucians, Psoroferia columbiae, Culicoides spp., Aedes spp. and Haematobia irritans [L.]-repelling concentration and quantity of a dimethyl substituted oxymethyl cyclohexane derivative-containing composition of matter, wherein the dimethyl substituted oxymethyl cyclohexane composition of matter is defined according to the structure: 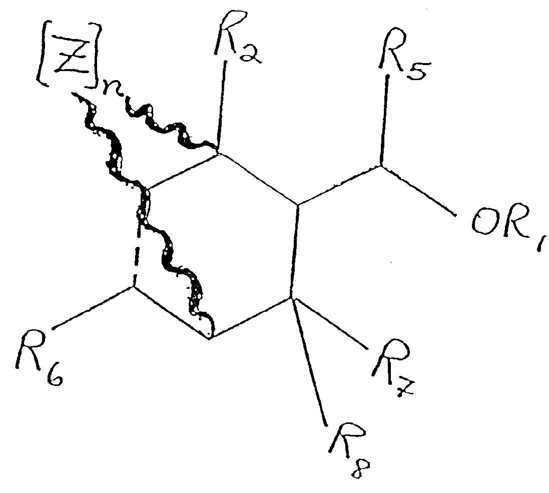 wherein Z is methylene; n is 0 or 1; each of the wavy lines represents a carbon-carbon single bond or no bond; the dashed line represents a carbon-carbon double bond or a carbon-carbon single bond; each of R₂, R₅, R₆, R₇ and R₈ are the same or different and each represents hydrogen or methyl; and R₁ represents hydrogen, acetyl or ethoxyl carbonyl.

2. A method according to Claim 1 wherein the insect repelling substances have chemical structures selected from the group consisting of:

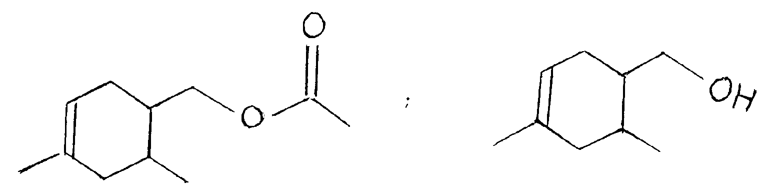

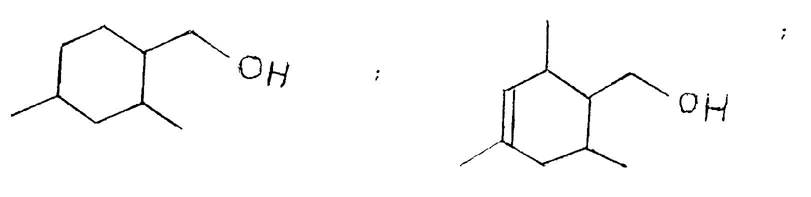

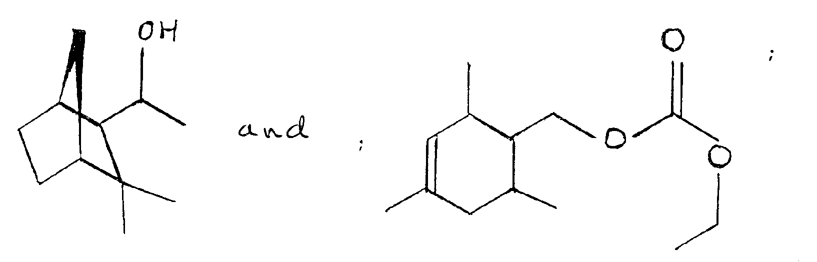

3. A method according to Claim 1 or 2 wherein the composition of matter also contains geraldehyde according to the structure:

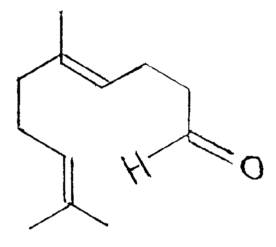

4. A method according to any one of the preceding claims, wherein the insect repelling composition is initially admixed with a soap base; the resulting mixture is formulated into a soap article; and the resulting soap article is used in a washing procedure.

## Patentansprüche

1. Verfahren zur Abwehr von Musca domestica L. (Diptera:Muscidae), Aedes aegypti, Culex nigripalpus, Aedes atlanticus, Culex salinarius, Aedes vexans, Culex spp., Simulium spp., Psoroferia ferox, Aedes infirmatus, Drosophila melanoaaster. Coccinellidae, Anopheles crucians, Psoroferia columbiae, Culicoides spp., Aedes spp. und/oder Haematobia irritans [L.] und/oder Aedes albopiotus für einen endlichen Zeitraum von einem dreidimensionalen Raum, in dem sich die genannten Musca domestica L. (Diptera:Muscidae), Aedes aegypti, Aedes albopictus, Culex nigripalpus, Aedes atlanticus, Culex salinarius, Aedes vexans, Culex spp., Simulium spp., Psoroferia ferox, Aedes infirmatus, Drosophila melanoaaster, Coccinellidae, Anopheles crucians, Psoroferia columbiae, Culicoides spp., Aedes spp. und/oder Haematobia irritans [L.] aufhalten können, bestehend im wesentlichen aus dem Schritt der Aussetzung des dreidimensionalen Raums einer zur Abwehr von Musca domestica L. (Diptera:Muscidae), Aedes aegypti, Aedes albopictus, Culex nigripalpus, Aedes atlanticus, Culex salinarius, Aedes vexans, Culex spp., Simulium spp., Psoroferia ferox, Aedes infirmatus, Drosophila melanogaster Coccinellidae, Anopheles crucians, Psoroferie columbiae. Culicoides spp.. Aedes spp. und Haematobia irritans [L.] wirksamen Konzentration und Menge einer Stoffzusammensetzung, die ein dimethylsubstituiertes Oxymethylcyclohexanderivat enthält, wobei die dimethylsubstituierte Oxymethylcyclohexan-Stoffzusammensetzung gemäß der Struktur: 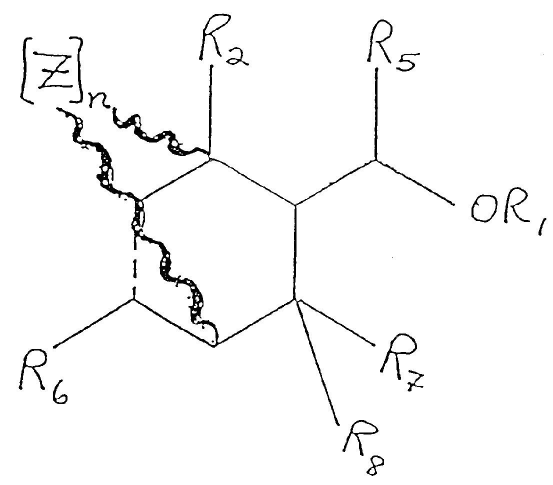 definiert ist, worin Z Methylen ist, n 0 oder 1 ist, jede der Wellenlinien eine Kohlenstoff-Kohlenstoff-Einfachbindung oder keine Bindung bedeutet, die gestrichelte Linie eine Kohlenstoff-Kohlenstoff-Doppelbindung oder eine Kohlenstoff-Kohlenstoff-Einfachbindung bedeutet, jeder der Reste R₂, R₅, R₆, R₇ und R₈ gleich oder verschieden ist und jeweils Wasserstoff oder Methyl bedeutet, und R₁ Wasserstoff, Acetyl oder Ethoxycarbonyl bedeutet.

2. Verfahren gemäß Anspruch 1, bei dem die insektenabwehrenden Substanzen chemische Strukturen haben, die ausgewählt sind aus der Gruppe, bestehend aus:

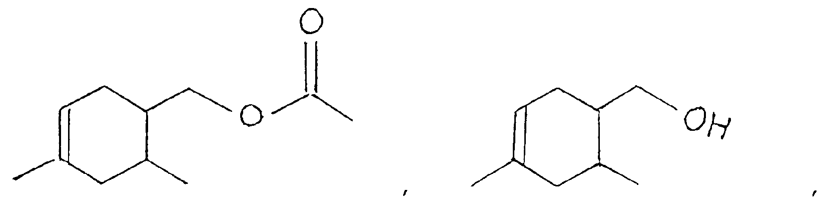

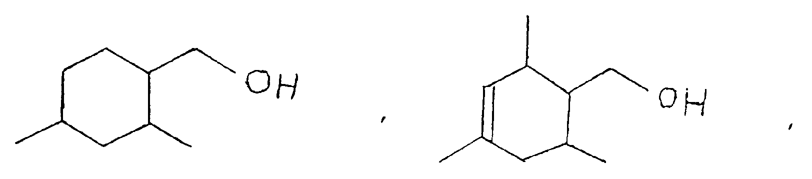

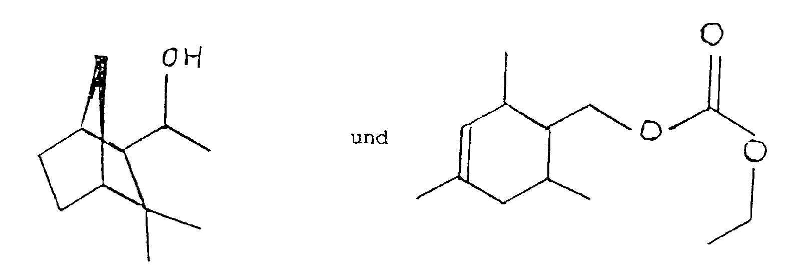

3. Verfahren gemäß Anspruch 1 oder 2, worin die Stoffzusammensetzung auch Geranial gemäß der Struktur: 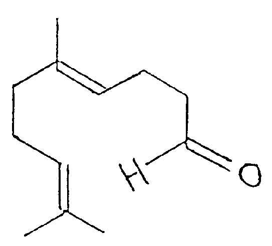 enthält.

4. Verfahren gemäß irgendeinem der vorhergehenden Ansprüche, bei dem die insektenabwehrende Zusammensetzung zunächst mit einer Seifenbasis vermischt wird, die resultierende Mischung zu einem Seifenartikel formuliert wird und der resultierende Seifenartikel bei einer Waschprozedur verwendet wird.

## Revendications

1. Procédé pour repousser Musca domestica L. (Diptera:Mucidae), Aedes aegypti, Culex niari^{p}aipus, Aedes atlanticus, Culex salinarius, Aedes vexans, Culex spp., Simulium spp., Psoroferia ferox, Aedes infirmatus, Drosophila melanogaster. Coccinellidae, Anophèles crucians, Psoroferia columbiae. Culicoides spp., Aedes spp., et/ou Haematobia irritans [L.], et/ou Aedes albopictus durant une période de temps finie d'un espace tri-dimensionnel habitable par lesdits Musca domestica L. (Diptera:Mucidae), Aedes aegypti. Aedes albopictus, Culex nigripalpus, Aedes atlanticus. Culex salinarius, Aedes vexans, Culex spp., Simulium spp., Psoroferia ferox. Aedes infirmatus, Drosophila melanoaaster. Coccinellidae, Anophèles crucians, Psoroferia columbiae, Culicoides spp., Aedes spp., et/ou Haematobia irritans [L.], consistant essentiellement en l'étape d'exposer ledit espace tri-dimensionnel à une concentration et une quantité répulsive efficace contre Musca domestica L (Diptera:Mucidae), Aedes aegyapti. Culex niari^{p}alpus. Aedes atlanticus. Culex salinarius. Aedes vexans, Culex spp.. Simulium spp.. Psoroferia ferox, Aedes infirmatus, Drosophila melanogaster, Coccinellidae, Anophèles crucians. Psoroferia columbiae. Culicoides Spp.. Aedes spp.. et/ou Haematobia irritans [L.] d'une composition de matière contenant un dérivé d'oxyméthylcy- clohexane diméthyl-substitué, dans lequel la composition de matière d'oxyméthyl-cyclohexane diméthyl-substitué est définie selon la structure : 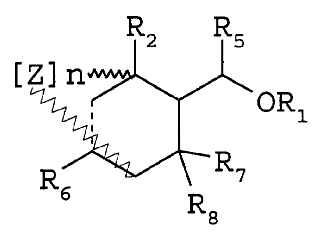 dans laquelle Z représente le groupe méthylène; n représente 0 ou 1; chacun des traits en zig-zag représente une simple liaison carbone-carbone ou aucune liaison; le trait en pointillés représente une double liaison carbone-carbone ou une simple liaison carbone-carbone; chacun de R₂, R₅, R₆, R₇ et R₈ est identique ou différent et représente indépendamment un atome d'hydrogène ou un groupe méthyle; et R₁ représente un atome d'hydrogène, un groupe acétyle ou éthoxy-carbonyle.

2. Procédé selon la revendication 1, dans lequel les substances répulsives pour insectes ont des structures chimiques choisies parmi le groupe constitué de :

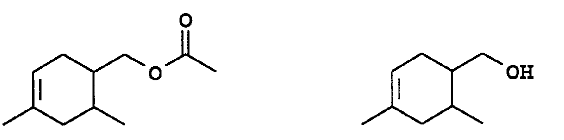

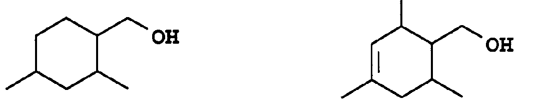

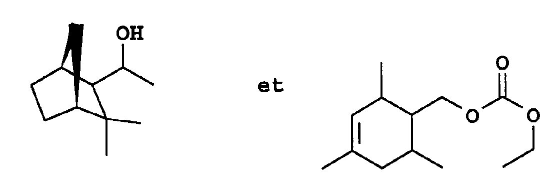

3. Procédé selon la revendication 1 ou 2, dans lequel la composition de matière contient aussi un géraldéhyde selon la structure :

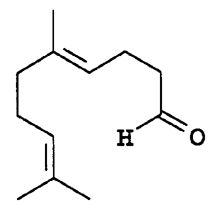

4. Procédé selon l'une quelconque des revendications précédentes, dans lequel la composition répulsive pour insectes est initialement mélangée avec une base lavante; le mélange résultant est formulé en un article de lavage; et l'article de lavage résultant est utilisé lors d'une procédure de lavage.
